# EUROPEAN PATENT SPECIFICATION

(11) **EP 4 033 115 B1**
(45) Date of publication and mention of the grant of the patent: **14.02.2024**
(21) Application number: 22162209.5
(22) Date of filing: 03.08.2018
(51) Int. Cl.: F16C 21/00, F16C 19/54, B66C 23/52, F16C 17/26, F16C 17/10, F16C 19/30, F16C 33/58, F16C 33/60, B66C 23/84, F16C 43/00

(54) **ANNULAR BEARING, METHOD FOR ASSEMBLING SUCH A BEARING, HOISTING CRANE**
DREHKRANZLAGER, VERFAHREN ZUR MONTAGE EINES SOLCHEN DREHKRANZLAGERS, HEBEKRAN
PALIER DE PIVOTEMENT, PROCÉDÉ DE MONTAGE D'UN TEL PALIER DE PIVOTEMENT, GRUE DE LEVAGE

(30) Priority: 04.08.2017 NL 2019393; 12.10.2017 NL 2019721; 18.10.2017 NL 2019761
(43) Date of publication of application: 27.07.2022
(62) Divisional of application: 18766375.2
(73) Proprietor: Itrec B.V., 3115 HH Schiedam (NL)
(72) Inventor: SLOB, Wouter Johannes, 3115 HH SCHIEDAM (NL); ROODENBURG, Joop, 3115 HH SCHIEDAM (NL); WETERINGS, Dhr. Hendrikus Jacobus, 3115 HH SCHIEDAM (NL)
(74) Representative: EP&C

(56) References cited:
- EP-A1- 1 889 779
- DE-A1-102011 083 824
- DE-U1-202007 002 609
- DE-U1-202015 006 588
- FR-A1- 2 621 366
- FR-A1- 2 749 358
- US-A- 4 622 860

## Description

A first aspect of the invention relates to an annular bearing assembly, which can for example be integrated in an annular slew bearing assembly in a hoisting crane, for example in a mast crane. Hoisting cranes of the latter type have already been commercially available from the applicant for decade.

Various bearings assemblies for such hoisting cranes are known, for example from WO2017045734 and EP2092204. However, the known bearings have disadvantages such as suboptimal distribution of forces, wear and fatigue, being complex to manufacture, and being cumbersome in maintenance.

It is an object of the first aspect of the invention to provide an improved or at least alternative annular bearing assembly.

This object is achieved with an annular bearing assembly according to claim 1.

Thus, the object of the first aspect of the invention is achieved with an annular bearing assembly comprising a lower ring and an upper ring, which upper ring comprises a first upper ring part and a second upper ring part. The upper ring is adapted to be moveable relative to the lower ring.

Preferably the lower ring is to be mounted stationary and in a horizontal plane, e.g. onto a column of a hoisting crane, and the upper ring is mounted to rotate about a rotation axis which extends vertically through a bearing centre of the bearing assembly. However, it is also possible for the upper ring to be stationary and the lower ring to rotate.

It is further envisaged for the bearing assembly to be used with the rotation axis of the bearing in vertical position. That is, said rotation axis is substantially vertical, and the annulus formed by the rings of the bearing assembly is in a substantially horizontal plane.

The lower ring comprises a protruding mating part, which is adapted to be arranged in a hollow mating part of the upper ring.

The bearing assembly preferably has, when seen in a transverse cross-section of the annulus, exactly one cage with one or two rollers therein, and three slide pads. The roller is arranged to carry the vertical downward forces, which is envisaged to be the vast majority of the overall forces exerted on the bearing assembly, since the bearing assembly is intended to be used with the rotation axis in vertical position and subjected to heavy vertical load.

The rollers are arranged in a circumferential series in a circumferential series of cages.

There is further a first slide pad which is absorbs vertical upward forces, but these forces are considerably less than the roller than those carried by the roller.

The bearing assembly further comprises a second and a third slide pad, which are each subjected to horizontal forces.

The inventors have found that particular arrangement of the lower ring and upper ring, in combination with the one cage and three slide pads in transverse cross-sectional view, results in an improved distribution of the forces among the components of the bearing assembly.

In the context of the first aspect of the invention, terms as "inner" and "inwards" are meant to mean closer to the bearing centre in the horizontal plane, while terms as "outer" and "outwards" are meant to mean further away from the bearing centre in the horizontal plane. Terms as "top", "above" and "higher" on the one hand, and "bottom", "under" and "lower" are meant to be interpreted in the conventional meaning, i.e. seen in vertical direction.

The first aspect of the invention further pertains to a method for assembling a bearing assembly according to the first aspect of the invention. Said method comprises the steps of:
- attaching a guide block on the bottom surface of the outer leg of the hollow mating part of the first upper ring part,
- arranging the first upper ring part on the lower ring, such that the protruding mating part of the lower ring is arranged in the hollow mating part of the first upper ring part, and the first upper ring part is supported by the rollers,
- detaching the guide block from the first upper ring part,
- attaching the second upper ring part on the bottom surface of the outer leg of the hollow mating part of the first upper ring part.

According to the first aspect of the invention, a guide block is provided during assembly. The guide block enables to avoid metal to metal contact during the arranging of the first upper ring part on the lower ring, thereby avoiding damage.

In a possible embodiment of the bearing assembly according to the first aspect of the invention, the second upper ring part consists of two half-annular parts, such that the two half-annular parts combined form the annular shape.

This embodiment advantageously simplifies the assembling of the bearing assembly, and can thus also be applied in the method according to the first aspect of the invention. Conventionally, the second upper ring part is manufactured as a single annular part. It must therefore be brought into an assembling position before the first upper ring part is arranged on the lower ring. Furthermore, it cannot be removed, e.g. for maintenance, without first dissembling the first upper ring part and the lower ring. With the second upper ring part according to this embodiment which consist of two half-annular parts, these parts can be brought from the side inwards under the first upper ring part when the first upper ring part is already arranged on the lower ring. Each of the parts can then be attached to each other and/or the first upper ring part. Similarly, the second upper ring part can also be removed to the side outwards, which simplifies maintenance.

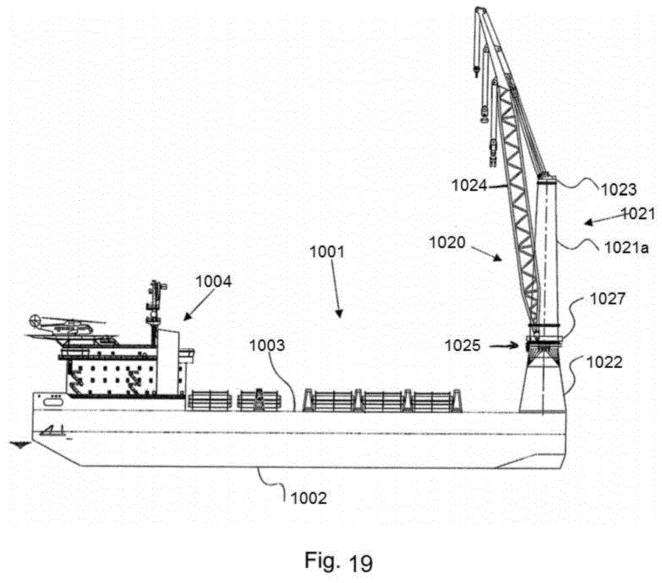

Further advantageous embodiments are described in the dependent claims and in the following description with reference to the drawings. In the various drawings, like reference numbers are used to indicate like features. Figures 19-24 are related to the present invention. All other figures are not part of the invention.

The invention will now be described in a non-limiting way by reference to the accompanying drawings in which like parts are indicated by like reference symbols, and in which:
- Fig. 1: depicts a cross section of a part of a vessel including a slew bearing
- Fig. 2: depicts a cross section of the slew bearing of Fig. 1 during normal operation;
- Fig. 3: depicts a schematic top view of a part of the slew bearing of Fig. 1;
- Fig. 4: depicts the cross section of Fig. 2 during maintenance or inspection;
- Fig. 5: depicts a hoisting crane according to an embodiment of the invention;
- Fig. 6: depicts a cross section of a part of a vessel including a slew bearing;
- Fig.7: depicts a cross section of the slew bearing of Fig. 6 during normal operation; and
- Fig. 8: depicts the cross section of Fig. 7 during maintenance or inspection.
- Fig. 9a-9e: show subsequent steps involved with removing a roller bodies cage, or roller box, with axial load rollers via a top entry port;
- Fig 10a-10d: show subsequent steps involved with removing a roller bodies cage, or roller box, with axial load rollers via a side entry port;
- Fig. 11a-11c: show a top view of a moveable bearing ring with multiple main components, each provided with entry ports, such a main component in isolation and a perspective view of such a mina component lifted in a raised maintenance position;
- Fig. 12: shows a perspective view of a main portion of a moveable bearing ring and a stationary bearing ring, the main portion being in an operational position relative to the stationary bearing ring;
- Fig. 13: shows a perspective view of the main portion of the moveable bearing ring and the stationary bearing ring of fig. 12, the main portion being lifted in a raised maintenance position relative to the stationary bearing ring;
- Fig. 14: shows a cross sectional view of a slew bearing at a location of the slew bearing ring where the moveable bearing ring comprises a main portion and an auxiliary portion;
- Fig. 15: shows a cross sectional view of the slew bearing of figure 14, at a location of the slew bearing ring where the moveable bearing ring comprises top entry port for providing access to a raceway;
- Fig. 16: shows a cross sectional view of the slew bearing of figure 14, at a further location of the slew bearing ring, i.e. a section without a lifting actuator or entry port;
- Fig. 17a-17b: show alternative top views of a first pushing device; and
- Fig. 18a- 18c: show a schematical view in cross section of alternative configurations of a slew bearing;
- Fig. 19: diagrammatically depicts a vessel comprising a hoisting crane ;
- Fig. 20: shows a hoisting crane at the rear side of a vessel, partially in the form of a cut-away view;
- Fig. 21: shows an annular bearing assembly according to the first aspect of the invention in top view
- Fig. 22: shows an a cross section of annular bearing assembly according to the first aspect of the invention arranged in a hoisting crane
- Fig. 23a: shows a groove of a lower ring of a bearing assembly according to the first aspect of the invention, with therein arranged a cage comprising a roller
- Fig. 23b: shows a top view of a plurality of cages comprising a plurality of rollers of a bearing assembly according to the first aspect of the invention
- Fig. 24: illustrates a method to assemble a bearing assembly according to the first aspect of the invention.

Whilst primarily presented for illustrative purposes with reference to one or more of the figures, any of the technical features addressed below may be combined with any of the independent claims and clauses of this application either alone or in any other technically possible combination with one or more other technical features.

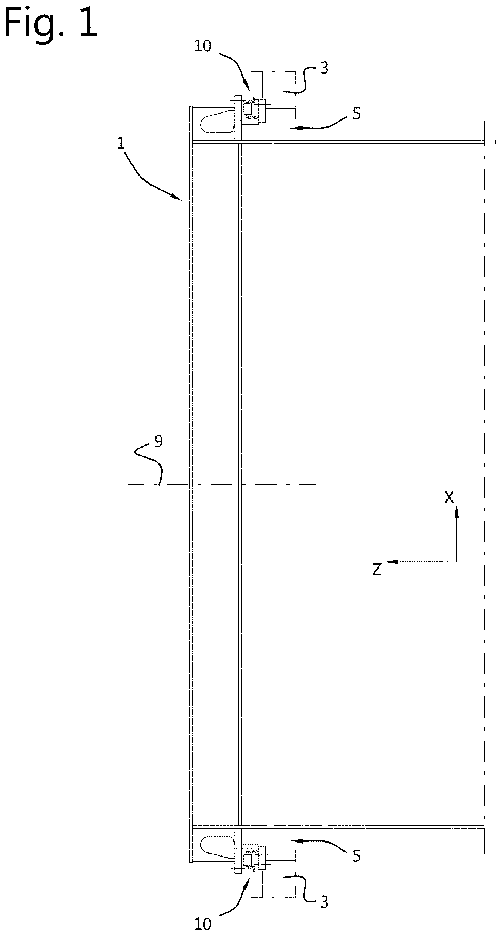

Fig. 1 depicts a part of a vessel 1 comprising a hull 3 with an opening 5 extending vertically through the hull 3. For clarity reasons, the drawing has been rotated 90 degrees such that the vertical extends parallel to the indicated Z-direction and the horizontal extends parallel to the indicated X-direction.

A turret 7 is provided in the opening 5 of the hull 3. Turrets are usually cylindrical elements generally used in floating production storage and offloading vessels. The vessel 1 is then equipped with hydrocarbon processing equipment for separation and treatment of crude oil, water and gasses, arriving on board from sub-sea oil wells via flexible pipelines connected to the turret.

The turret 7 can be moored to the seabed with chains, wires and anchors. A slew bearing 10 is provided between the hull 3 and the turret 7 to allow free and unrestricted 360° rotation of the vessel 1 around the turret 7. This allows weathervaning in which the vessel will normally lay head to the prevailing environment.

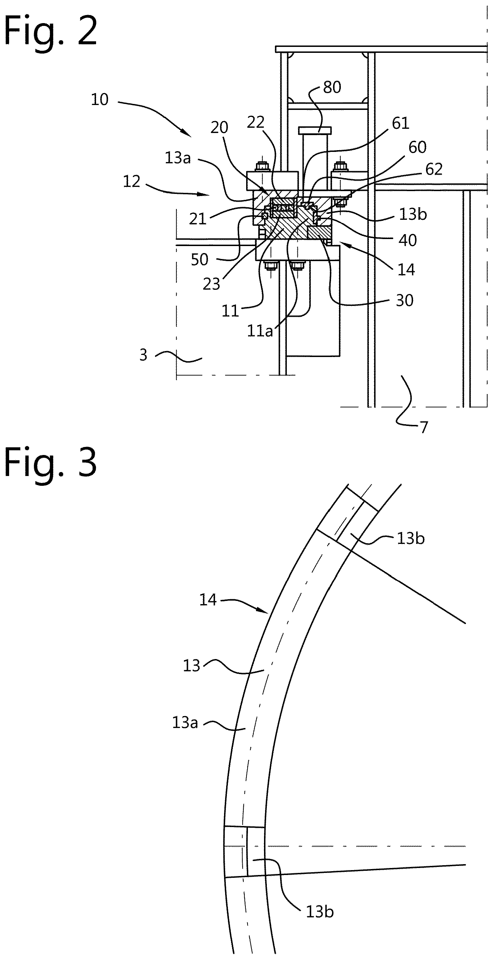

Fig. 2 depicts a cross section of the slew bearing 10 and part of the turret 7 and hull 3 during normal operation. The slew bearing 10 comprises a stationary bearing ring 11 fixed to the hull 3 which acts as base for the slew bearing 10. The slew bearing 10 further comprises a moveable bearing ring 12 fixed to the turret 7, which moveable bearing ring is concentric with the stationary bearing ring. The stationary bearing ring 11 and moveable bearing ring 12 are configured to enable rotation of the moveable bearing ring relative to the stationary bearing ring about a rotation axis 9 (see Fig. 1).

The slew bearing 10 comprises a number of bearings to transfer loads that act in different directions between the moveable bearing ring and the stationary bearing. One of the provided bearings is an upper main axial bearing 20 allowing to transfer axial loads from the moveable bearing ring to the stationary bearing ring caused by the weight of the moveable bearing ring and turret 7 connected thereto.

The slew bearing further comprises a lower main axial bearing 30 allowing to transfer axial loads between the stationary bearing ring and moveable bearing ring preventing the moveable bearing ring to disengage from the stationary ring.

In order to transfer radial loads between the moveable bearing ring 12 and stationary bearing ring 11, the slew bearing 10 is provided with an inner main radial bearing 40 and an outer main radial bearing 50.

The upper main axial bearing 20 comprises a row of axial load rollers 21, which rollers 21 are arranged between a top roller raceway 22 and a bottom roller raceway 23, the top roller raceway 22 being connected to the moveable bearing ring 12 and the bottom roller raceway 23 being connected to the stationary bearing ring 11. The use of the rollers 21 allows to transfer relatively high loads without too much wear and heat generation.

The lower main axial bearing 30 and the inner and outer radial bearings 40, 50 can be embodied as roller bearings or plain bearings in which low-friction pads are engaged with each other and able to slide relative to each other. Plain bearings are much simpler in construction and therefore preferred when the loads are relatively low.

In the particular embodiment shown, the moveable bearing ring 12 has a C-shaped cross section, comprising a top ring member 13, which can be best seen in Fig. 3 depicting a part of the slew bearing 10 from above, and a bottom ring member 14. The stationary bearing ring comprises a flange section 11a which extends in the radial direction, here, in the embodiment shown, the radially inward direction.

In this embodiment, the moveable bearing ring 12 comprises a main portion 13a as part of the top ring member 13 which includes the entire top roller raceway 22 of the upper main axial bearing 20.

The moveable bearing ring 12, in this case the top ring member 13 further comprises a plurality of auxiliary portions 13b distributed along the moveable bearing ring 12. The auxiliary portions 13b are provided with upper low-friction pads 61 as part of an upper auxiliary axial bearing 60. Corresponding lower low-friction pads 62 are arranged on the stationary bearing ring.

The upper auxiliary axial bearing 60 is provided in parallel to the upper main axial bearing 20 and also able to transfer axial loads between the moveable bearing ring and stationary bearing ring when the upper low-friction pads and lower low-friction pads engage with each other.

In this embodiment, during normal operation as shown in Fig. 2, the auxiliary portions 13b and the main portion 13a are connected to the turret 7 such that the main part of the axial loads is transferred between the moveable bearing ring and stationary bearing ring via the upper main axial bearing 20.

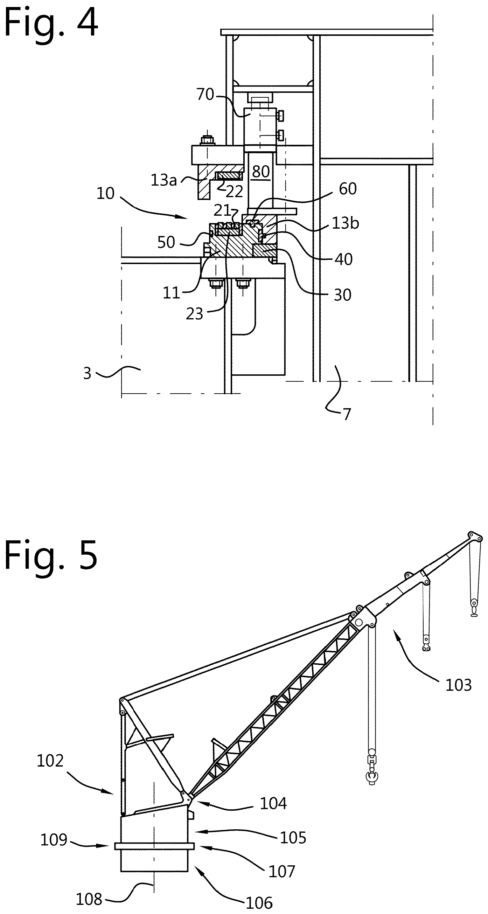

The advantage of the auxiliary portions 13b and the upper auxiliary axial bearing will be apparent by reference to Fig. 4. In this Fig. 4, the auxiliary portions 13b have been disconnected from the turret 7 and an actuator device 70, e.g. a hydraulic jack system, is provided between the auxiliary portions 13b and the turret 7. By actuating the actuator device 70 it is possible to lift the turret 7 relative to the auxiliary portions 13b. Due to the fact that the main portion 13a is still connected to the turret, lifting the turret 7 will also lift the main portion 13a including top roller raceway 22 and allow access to the rollers 21.

In other words, the main portion 13a is moveable relative to the auxiliary portions 13b between an operational position as shown in Fig. 2, in which the top roller raceway of the main portion engages with axial load rollers to transfer axial loads between the moveable bearing ring and the stationary ring, and a raised maintenance position as shown in Fig. 4, in which the top roller raceway is disengaged from the axial load rollers.

In the raised maintenance position of the main portion 13a, the upper auxiliary axial bearing 60 will then take over the transfer of the axial loads between the moveable bearing ring and the stationary ring, so that the turret is still able to rotate relative to the hull. In other words, inspection and maintenance can be performed while the slew bearing is still fully functional albeit that it may be preferred to carry out inspection and/or maintenance during relatively mild and quiet weather conditions.

Depending on the available space and the dimensions of the actuator device 70 additional support elements may be used. In the embodiment of Figs. 1-4, a support element 80 is provided on the auxiliary portions 13b for the actuator device 70 to reduce the available space between auxiliary portions and frame elements of the turret 7, thereby allowing to use a smaller actuator device.

As indicated by the Figs. 2 and 4, the actuator device does not necessarily have to be provided permanently. It is well possible that during normal operation the actuator devices are not present and only installed when inspection and/or maintenance is required.

Fig. 5 shows a side view of a hoisting crane. The hoisting crane comprises a crane structure 102, which crane structure comprises a jib 103. In the embodiment shown, the jib 103 can be pivoted about a substantially horizontal pivot axis 104.

The crane structure 102 further comprises a crane housing 105 with a slew platform 109 at a lower side thereof. To support the crane structure 102 including crane housing 105, a base 106 is provided, which base can be secured to a vessel. To enable rotation of the crane structure 102 about a vertical axis, the hoisting crane is provided with a slew bearing 107 between the base 106 and the slew platform 109. The slew bearing 107 has a rotational axis 108 that extends in a substantially vertical direction and allows the slew platform 109, and thus the crane structure 102 comprising the jib 103, to be rotated relative to the base 106 about that rotational axis 108.

The slew bearing 107 can be similarly embodied as the slew bearing of Figs 1-4, with the difference that the moveable bearing ring is fixed to the slew platform 109 instead of the turret.

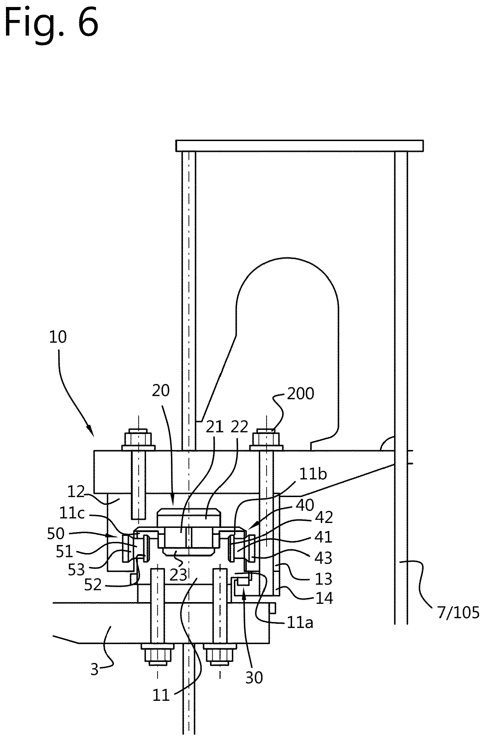

Fig. 6 depicts a cross section of a vessel with a slew bearing 10 according to another embodiment of the invention. The slew bearing 10 comprises a stationary bearing ring 11 fixed to a hull 3 of the vessel, which hull 3 acts as base for the slew bearing 10. The slew bearing 10 further comprises a moveable bearing ring 12 fixed to a turret 7 or slew platform 105 of a crane, which moveable bearing ring 12 is concentric with the stationary bearing ring 11. The stationary bearing ring 11 and the moveable bearing ring 12 are configured to enable rotation of the moveable bearing ring 12 relative to the stationary bearing ring 11 about a rotation axis.

The slew bearing 10 comprises a number of bearings to transfer loads that act in different directions between the moveable bearing ring 12 and the stationary bearing ring 11. One of the provided bearings is an upper main axial bearing 20 allowing to transfer axial loads from the moveable bearing ring 12 to the stationary bearing ring 11 caused by the weight of the moveable bearing ring 12 and structure 7 or 105 connected thereto.

The slew bearing further comprises a lower main axial bearing 30 allowing to transfer axial loads between the stationary bearing ring 11 and the moveable bearing ring 12 preventing the moveable bearing ring 12 to disengage from the stationary bearing ring 11.

In order to transfer radial loads between the moveable bearing ring 12 and the stationary bearing 11, the slew bearing 10 is provided with an inner main radial bearing 40 and an outer main radial bearing 50.

The upper main axial bearing 20 comprises a row of axial load rollers 21, which rollers 21 are arranged between a top roller raceway 22 and a bottom roller raceway 23, the top roller raceway 22 being connected to the moveable bearing ring 12 and the bottom roller raceway 23 being connected to the stationary bearing ring 11. The use of the rollers 21 allows to transfer relatively high loads without too much wear and heat generation.

The lower main axial bearing 30 can be embodied as roller bearings as well, but are in this embodiment embodied as plain bearings in which low-friction pads are engaged with each other and able to slide relative to each other. Plain bearings are much simpler in construction and therefore preferred when the expected loads are relatively low.

In the particular embodiment shown, the moveable bearing ring 12 has a C-shaped cross section, comprising a top ring member 13 and a bottom ring member 14. The stationary bearing ring 11 comprises a flange section 11a which extends in the radial direction, here, in the embodiment shown, the radially inward direction.

In this embodiment, the inner radial bearing 40 is embodied as a roller bearing comprising a row of radial load rollers 41, which rollers 41 are arranged between a first raceway 42 and a second raceway 43, wherein the first raceway 42 is connected to the stationary bearing ring 11 and the second raceway 43 is connected to the moveable bearing ring 12, in this case the top ring member 13 thereof.

In this embodiment, the out radial bearing 50 is embodied as a roller bearing comprising a row of radial load rollers 51, which rollers 51 are arranged between a first raceway 52 and a second raceway 53, wherein the first raceway 52 is connected to the stationary bearing ring 11 and the second raceway 53 is connected to the moveable bearing ring 12, in this case the top ring member 13 thereof.

As both the inner and outer radial bearings 40, 50 are embodied as roller bearing including rollers of which the respective rotation axes are oriented substantially vertical, there is the risk of rollers falling out of their intended position during assembly and maintenance. This has been solved in this embodiment by providing a respective removable cover element 11b, 11c. The rollers are then retained by the respective cover element 11b, 11c and a corresponding other portion of the stationary bearing ring 11, e.g. opposite the cover element 11b, 11c, to prevent them from inadvertently falling out of the stationary bearing ring 11. The cover portions 11b, 11c being removable allows for easy assembly and removal of the rollers in case of maintenance. As is preferred, the rollers may be provided with axial protrusions being received in corresponding recesses or grooves of said cover element 11b, 11c and said other portion of the stationary bearing ring 11. The recesses or grooves in the cover elements 11b, 11c may be referred to as upper grooves and the recesses or grooves in the other portion of the stationary bearing ring 11 may be referred to as lower grooves.

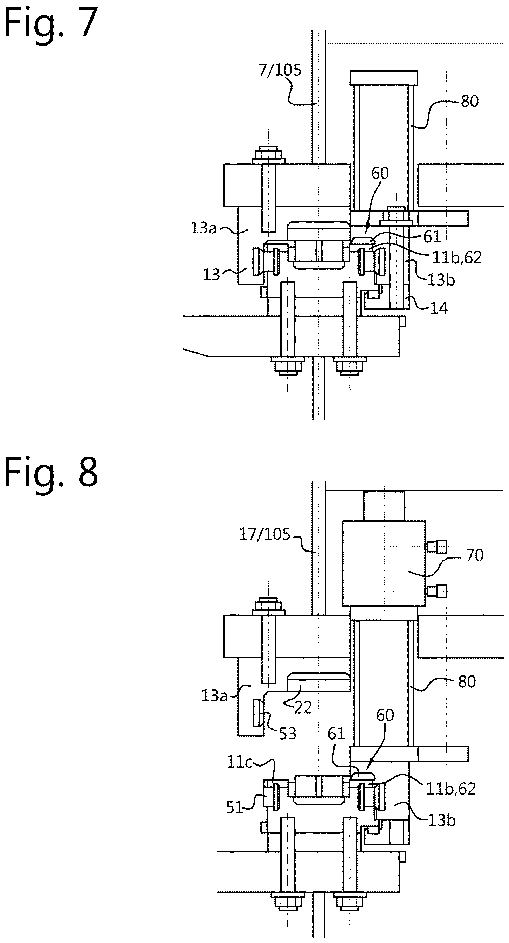

Fig. 6 depicts a cross section of the slew bearing 10 at a location where the entire top ring member 13 is made of one piece and connected to the bottom ring member 14 via bolts 200. This connection may not be intended to be released during regular maintenance. For regular maintenance there are maintenance sections provided, e.g. distributed along the entire circumference of the slew bearing, allowing to get access to the upper main axial bearing 20. A cross section of the slew bearing at such a maintenance section is depicted in Fig. 7 for an operational situation and in Fig. 8 for a maintenance situation.

At the maintenance sections, the moveable bearing ring 12 comprises a main portion 13a as part of the top ring member 13 which includes the top roller raceway 22 of the upper main axial bearing 20. The moveable bearing ring 12, in this case the top ring member 13 further comprises an auxiliary portion 13b. The auxiliary portion 13b is provided with upper low-friction pads 61 as part of an upper auxiliary axial bearing 60. Corresponding lower low-friction pads 62 are arranged on the stationary bearing ring 11. In this example, the cover element 11b also comprises the lower low-friction pads 62.

The upper auxiliary axial bearing 60 is provided in parallel to the upper main axial bearing 20 and also able to transfer axial loads between the moveable bearing ring 12 and the stationary bearing ring 11 when the upper low-friction pads 61 and lower low-friction pads 62 engage with each other.

In the operational situation shown in Fig. 7, the main portion of the axial loads is transferred between the moveable bearing ring 12 and the stationary bearing ring 11 via the upper main axial bearing 20 shown in Figs. 6 and 7.

In the maintenance situation shown in Fig. 8, the turret 7 or the slew platform 105 of a crane is lifted with respect to the auxiliary portion 13b using an actuator device 70, e.g. a hydraulic system, between the auxiliary portion 13b and the turret 7 or the slew platform 105. Due to the fact that the main portion 13a is still connected to the turret 7 or the slew platform 105, lifting the turret 7 or the slew platform 105 will also lift the main portion 13a including the top roller raceway 22 and allow to access the rollers 21.

In other words, the main portion 13a is moveable relative to the auxiliary portion 13b between an operational position as shown in Fig. 7, in which the top roller raceway of the main portion engages with axial load rollers to transfer axial loads between the moveable bearing ring and the stationary ring, and a raised maintenance position as shown in Fig. 8, in which the top roller raceway is disengaged from the axial load rollers.

In the raised maintenance position of the main portion 13a, the upper auxiliary bearing 60 will then take over the transfer of the axial loads between the moveable bearing ring and the stationary ring, so that the turret 7 or the slew platform 105 is still able to rotate relative to the hull of the vessel. In other words, inspection and maintenance can be performed while the slew bearing is still fully functional albeit that it may be preferred to carry out inspection and/or maintenance during relatively mild and quiet weather conditions.

Depending on the available space and the dimensions of the actuator device 70 additional support elements may be used. An example of such a support element 80 is depicted in the figs. 7 and 8 to reduce the available space between the auxiliary portion 13b and the frame elements of the turret7 or the slew platform 105, thereby allowing to use a smaller actuator device 70.

In this embodiment it is assumed that at the sections depicted in Fig. 6, the top ring member 13 stays connected to the lower ring member 14, so that lifting the turret 7 or the slew platform 105 requires the turret 7 or the slew platform 105 to be temporarily be disconnected from the top ring member 13. In that case the top ring member 13 portion of Fig. 6 may be connected to the auxiliary portion 13b. However, in an alternative embodiment, the top ring member 13 stays connected to the turret 7 or the slew platform 105, so that the connection between the top ring member 13 and the lower ring member 14 needs to be disconnected to allow the turret 7 or the slew platform 105 to be lifted. In that case, the top ring member 13 portion of Fig. 6 may be connected to the main portion 13a. An advantage of the latter embodiment is that access is obtained to all rollers at once.

As shown in Fig. 8, lifting the main portion 13a also disengages the raceway 53 from the rollers 51. In absence of the raceway 53, the rollers 51 are kept in position by cover element 11c.

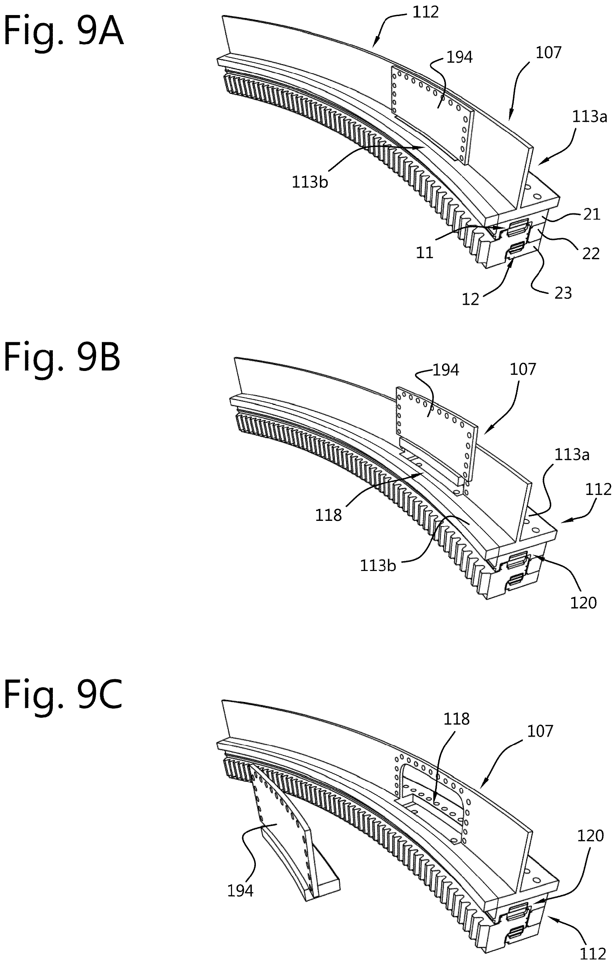

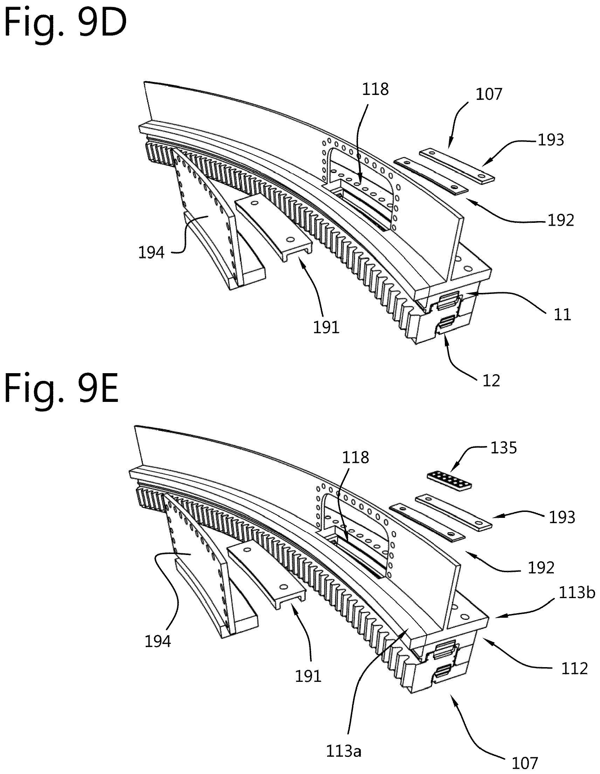

Figs. 9a-9f each show a perspective view of a section of a slew bearing 107 in which a top entry port 118 is provided. It is submitted that the moveable bearing ring 112 comprises a main portion 113a, with the top roller raceway of the upper main axial bearing 120 and the top entry port 118, and a corresponding auxiliary portions 113b, comprising a part of the upper low-friction pads of a lower main axial bearing 130. The configuration of the moveable bearing ring is thus similar to the moveable bearing ring depicted in figures 2 and 4.

The series of Figs shows the subsequent steps involved with removing the roller bodies cage, or roller box 135, from the slew bearing 107. First, the hatch 194 is detached from the moveable bearing ring 112, and is subsequently lifted and removed from the top entry port 118, which process is shown in Fig. 5a, 5b and 5c respectively. After the hatch 194 has been removed, a filler element 193, a raceway element 191 and a liner element 192 are lifted from the top entry port and removed, which is depicted in Fig. 5d.

The moveable bearing ring 117 shown, in particular the main portion 13a of the moveable bearing ring, is depicted in its operational positon only. Preferably, the main portion is lifted into its raised maintenance position prior to the entry port being opened, and is only lowered into its operational position after the entry port has been closed.

Once the entry port, and in this case the additional components, have been removed to provide entry to the raceway, a pushing device can be installed to push the roller bodies cages in the raceway along at least a section of the slew bearing.

In an embodiment, the slew bearing is provided with a single entry port, which is used for both replacing the roller bodies cages and for pushing the roller bodies cages.

In a preferred embodiment, the slew bearing is provided with multiple entry ports, for example with two entry ports of which one is used to push the roller bodies cages along the raceway using a pushing device and another is used for replacing the roller bodies cages.

In such an embodiment, the a roller bodies cage is removed and checked, and if needed is replaced with another roller bodies cage. Once the roller bodies cage, or its replacement has been inserted, the pushing device pushes the row of roller bodies cages along the raceway until another roller bodies cage is aligned with the entry port to be checked and possibly replaced.

In an alternative embodiment, the at a first entry port a roller bodies cage is removed to enable a pushing device to insert a pushing member into the raceway and push the row of roller bodies cages along the raceway to align subsequent roller bodies cages at a second entry port. Thus, with each push, the row of roller bodies cages is advanced over the length of an entry port, which length of the entry port matches with at least the length of a roller bodies cage to enable removal of a roller bodies cage via the entry port.

Once the row of roller bodies cages has been advanced over the length of at least on roller bodies cage, at the second entry port, a roller bodies cage is lifted out of the raceway for inspection and possible replacement, and at the first entry port a roller bodies cage is inserted into the raceway, after which the pushing device can again push the row of roller bodies cages along the raceway.

Fig. 9e shows the roller bodies cage 35 lifted from its location in the raceway in the slew bearing 107. After the roller bodies cage has been removed, the elements, i.e. roller bodies cage and roller bodies, can be thoroughly inspected and replaced with new ones if required.

It is submitted that with a slew bearing according to the invention, the main portions of the moveable slew bearing do only need to be lifted to an extend that the roller bodies are disengaged, and the roller bodies cages can be freely pushed along the raceway. Thus, the raised maintenance position of the main portions of the moveable bearing ring only needs to be a little distance above the operational position, for example several centimetres. Thus, the actuator device for lifting the main portions can be limited in size and performance.

In a further embodiment, the actuator for lifting the main portions is configured to lift the main portions of the moveable bearing ring into a second, raised maintenance position, in which the main portions are lifted high enough to allow access to the raceway via gap between the main portions of the moveable bearing ring and the stationary bearing ring. In such an embodiment, the full raceway can be accessed and for maintenance. For example, the raceway can be provided with removable raceway elements and/or liner elements that can be replaced. Thus, the raceway can also be refurbished via the gap between the moveable bearing ring, or at least the main portions thereof, and the stationary bearing ring. thus, th bearing does not need to be disassembled and service and inspection of the slew bearing can be performed at location.

In the particular embodiment shown in the Figs. 9a-9e the moveable bearing ring 107 has a circumferential side wall 124, which side wall extends along the axial load rollers and guides these axial load rollers in a circumferential direction. in an embodiment, the side wall is provided with at least one side entry port 125 configured to allow access, in a lateral direction, to the roller bodies cages holding the axial load rollers.

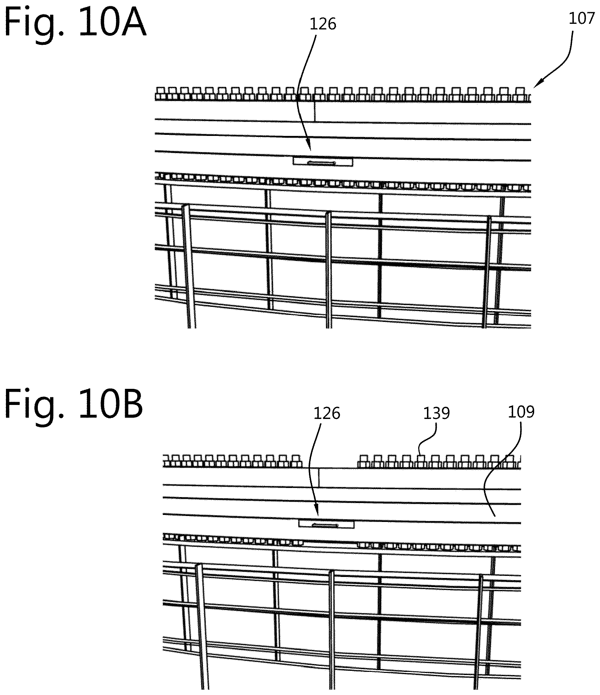

Figs. 10a-10d show a perspective view of part of the slew bearing 107 in which a side entry port 125 is provided. The side entry port can be provided in moveable bearing ring, preferably in a main portion thereof, or in the stationary bearing ring.

The side entry port 125 is provided with a removable insert 126. The removable insert 126 has a guide surface 127 that is part of the circumferential side wall 124 in which the entry port 125 is provided. The guide surface 127 of the insert is configured for guiding the axial load rollers of the upper main axial bearing in the circumferential direction. Therefore, the insert is either provided with a surface fit for guiding the axial load rollers, or the roller bodies cages, or can be provided with guides, such as low friction strips, etc.

The side entry port insert can be configured as a single body element or can comprise several elements, such as for example a low friction guide, an insert and a hatch. Furthermore, t In the particular embodiment shown in the Figs. 1-6 the top bearing ring 9 has a circumferential side wall 24, which side wall extends along the second row of axial load rollers 12 and guides these axial load rollers in a circumferential direction. According to the invention, the side wall 24 is provided with at least one side entry port 25 configured to allow access, in a lateral direction, to the second row of axial load rollers 12. In the particular embodiment shown, the side entry port is provided in the bottom section 23 of the top bearing ring 9.

Figs. 8a-d show a perspective view of part of the slew bearing 7 in which the side entry port 25 is provided. The side entry port is provided in a semi-circular bottom section segment.

The side entry port 25 is provided with a removable insert 26. The removable insert 26 has a guide surface 27 that is part of the circumferential side wall 24 in which the entry port 25 is provided. The guide surface 27 of the insert is configured for guiding the axial load rollers of the second row of axial rollers 12 in the circumferential direction. Therefore, the insert is either provided with a surface fit for guiding the axial load rollers, or the roller bodies cages, or can be provided with guides, such as low friction strips, etc.

As is the case with the removable raceway segment a side entry port insert van be configured as a single body element or as can comprises several elements, such as for example a low friction guide, an insert and a hatch. Furthermore, as is the case with the removable raceway segment, the side entry port insert can be removed from the entry port it is provided in without the need of taking apart the bearing, more in particular without removing any segments, such as semi-circular mid-section segments or semi-circular bottom segments, that are part of the bearing.

Also, the side entry port is dimensioned such that, when the removable insert has been removed from the side entry port, via the side entry port axial load rollers or the roller bodies cages they are provided in, can be removed and replaced in a substantially lateral direction from the second row of axial load rollers.

The Figs 8a-d show the subsequent steps involved in removing a roller bodies cage 35 from the second row of rollers 12. In the embodiment shown, the side entry port insert is provided with vertical openings, which when the side entry port insert is correctly located in the side entry port are indexed with the vertical openings provided in the semi-circular segments for receiving the bolts to keep the bearing ring together. Thus, these bolts can be sued to secure the side entry port insert in the side entry port.

Fig. 8a shows the removable insert 26 releasable secured in the side entry port 25. In this condition, the removable insert guides the roller bodies cage bodies. In fig. 8b the bolts that secured the side entry port insert in the side entry port have been removed to allow for the insert to be removed. In Fig. 8c the side entry port insert has been removed, which provided a view of the roller bodies cages of the first second row of roller bodied. It is also clear from Fig. 8c that the side entry port is dimensioned such that a roller bodies cage can be removed in a lateral direction from the bearing. Fig. 8d shows a roller bodies cage, which is provided with grip elements to facilitate engagement of the cage by hand, taken from the bearing.

In an alternative embodiment of a slew bearing the bottom bearing ring is provided with a circumferential side wall that extends along the second row of axial load rollers and guides these axial load rollers in a circumferential direction. In such an embodiment, the at least one side entry port can be provided in this side wall of the lower bearing ring to allow access, in a lateral direction, to the second row of axial load rollers.

The side entry port insert can be removed from the entry port it is provided in without the need of taking apart the bearing, more in particular without removing any components of the slew bearing, such as semi-circular mid-section segments or semi-circular bottom segments, that are part of the bearing.

Also, the side entry port is dimensioned such that, when the removable insert has been removed from the side entry port, via the side entry port axial load rollers or the roller bodies cages they are provided in, can be removed and replaced in a substantially lateral direction from the raceway.

The Figs 10a-10d show the subsequent steps involved in removing a roller bodies cage 135 from the raceway. In the embodiment shown, the side entry port insert is provided with vertical openings, which when the side entry port insert is correctly located in the side entry port are indexed with the vertical openings provided in the semi-circular segments for receiving the bolts to keep the bearing ring together. Thus, these bolts can be sued to secure the side entry port insert in the side entry port.

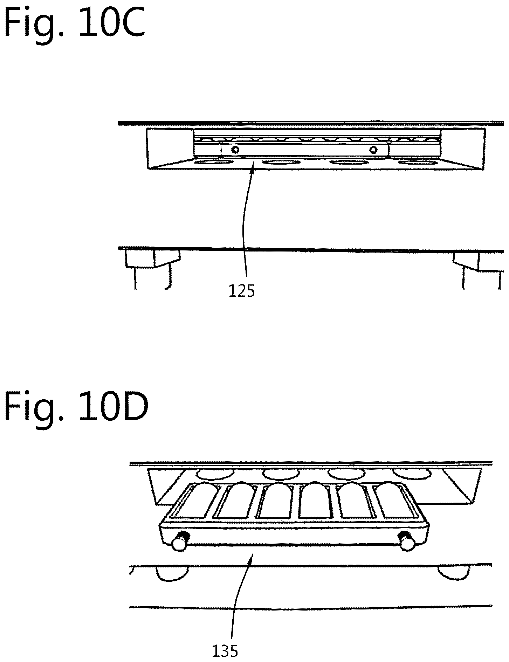

Fig. 10 a shows the removable insert 126 releasable secured in the side entry port 125. In this condition, the removable insert guides the roller bodies cage bodies. In fig. 8b the bolts that secured the side entry port insert in the side entry port have been removed to allow for the insert to be removed. In Fig. 8c the side entry port insert has been removed, which provided a view of the roller bodies cages of the first second row of roller bodied. It is also clear from Fig. 8c that the side entry port is dimensioned such that a roller bodies cage can be removed in a lateral direction from the bearing. Fig. 8d shows a roller bodies cage, which is provided with grip elements to facilitate engagement of the cage by hand, taken from the bearing.

In an alternative embodiment of a slew bearing according to the invention, the stationary bearing ring is provided with a circumferential side wall that extends along the row of axial load rollers and guides these axial load rollers in a circumferential direction. In such an embodiment, the at least one side entry port can be provided in this side wall of the lower bearing ring to allow access, in a lateral direction, to the second row of axial load rollers.

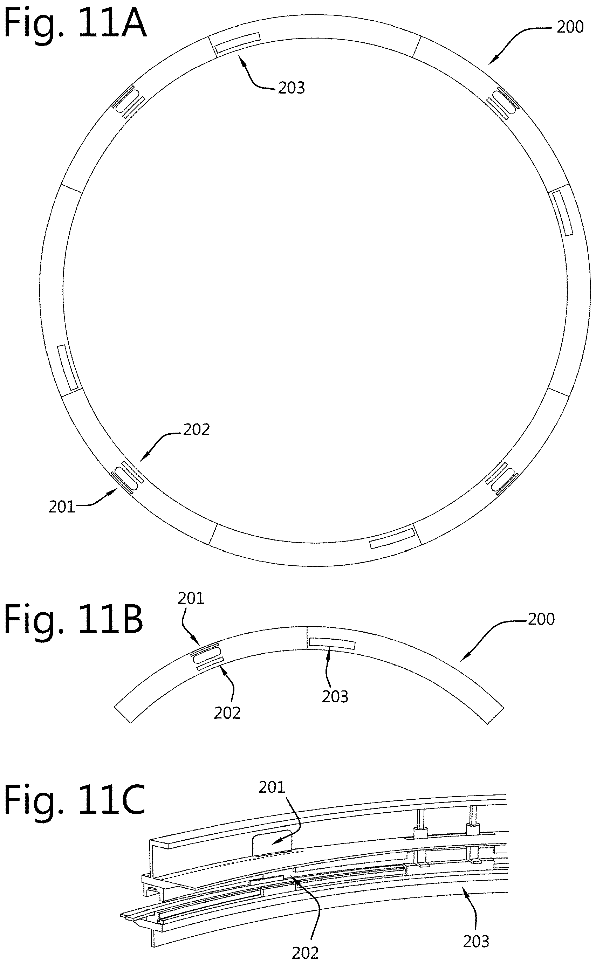

Figure 11a shows a top view of a moveable bearing ring comprising multiple, in the embodiment shown four, main components 200. Each main component comprises a top entry port 201 and a side entry port 202. Furthermore, each main component is provided with an actuator device 203, in the form of two hydraulic cylinders, for lifting the main component. Figure 11b shows a top view of a main component in isolation, and figure 11c shows a perspective view of the main component lifted into a maintenance position. It is submitted that the maintenance position shown in figure 11c is such that full access to the raceway is provided, and thus enables service to the raceways. For servicing the roller bodies cages, the mina component does not need to be lifted to such a height. For servicing the roller bodies cages the main component needs to be raised sufficiently for the top of the raceway to disengage the roller bodies, i.e. unload the rollers, such that the cages can be pushed around the raceway. Thus, the roller bodies cages can be pushed around the raceway and be serviced via the entry ports.

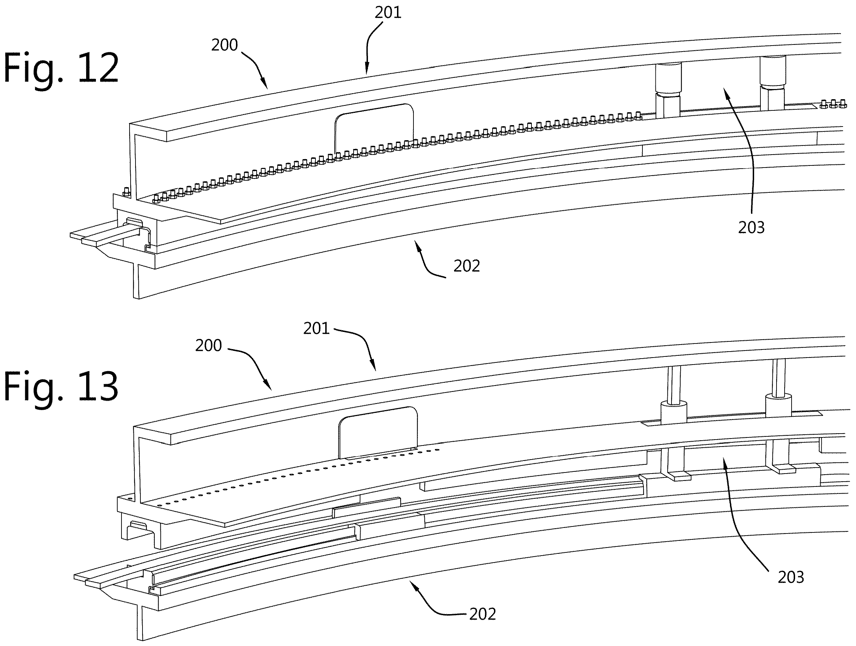

Figure 12 and figure 13 show the main component of figure 11c in more detail in a operational position and in a maintenance position respectively.

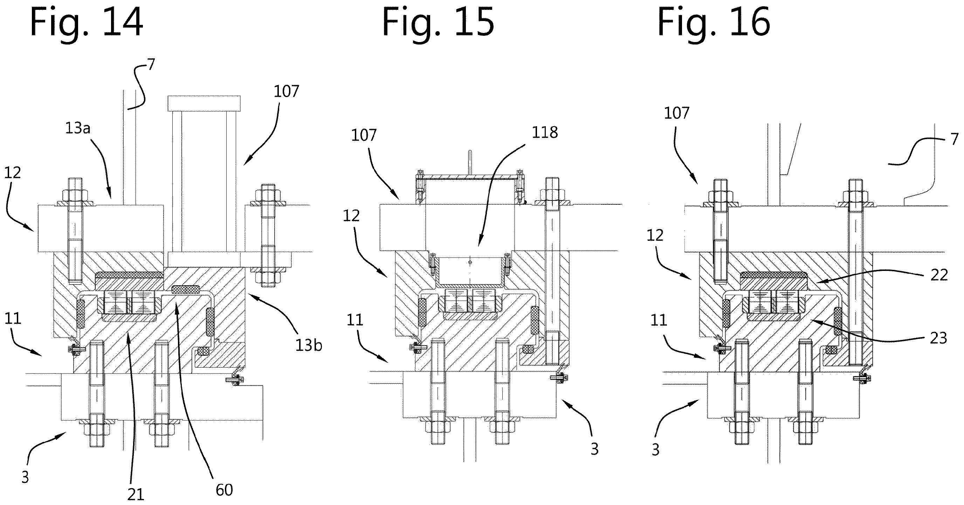

Figures 14-16 show three cross sections of a slew bearing similar to the one shown in figure 11a, this slew bearing comprising only top entry ports and being provided with an alternative actuator. Fig 14 shows a cross sectional view of the slew bearing ring where the moveable bearing ring comprises a main portion and an auxiliary portion. The figure also shows the actuator. Figure 15 shows a cross sectional view of the slew bearing of figure 14 at a location of the slew bearing ring where the moveable bearing ring comprises a top entry port for providing access to a raceway. Figure 16 shows a cross sectional view of the slew bearing of figure 14 at a further location of the slew bearing ring, i.e. at a location without a lifting actuator or entry port.

In an embodiment, the actuators are mounted on a skid platform that is mounted on a skid track, which allows for rotating the moveable bearing ring relative to the stationary bearing ring, while lifted by the actuators.

In an embodiment, the invention provides a slew bearing with multiple sections, e.g. four quarters, which sections are each provided with one or more top entry ports and/or one or more side entry ports and one or more actuators for lifting part of the moveable bearing ring, to enable servicing of the sections independently. Thus, each section, and the roller bodies cages located in that section, can be serviced while the other sections are in their working configuration, and thus transfer load from the moveable bearing ring to the stationary bearing ring.

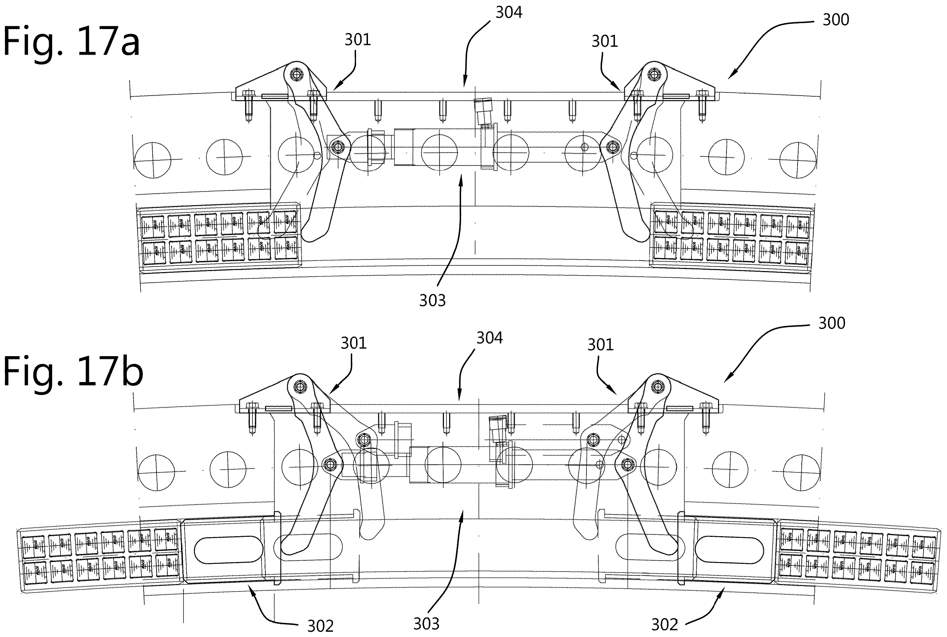

Fig. 17a-17b show alternative top views of a first pushing device 300 according to the invention. The pushing device comprise tow pushing members 301, each in the form of a v-shaped arm, which pushing members are at one end pivotably secured to the baring and at the opposite end configured to push a roller bodies cage, and in the embodiment shown a pusher block 302. The pushing member 301 are connected via a hydraulic cylinder 303, which can be used to move the arms between a first and second position. Figure 17b shows the pushing members in both the first and second position. Figure 17 also shows the pusher blocks 302 in two positions. in a first pushing step, the pushing members engage a roller bodies cage directly. In a second subsequent pushing step, pusher blocks are used.

By providing the pusher blocks 302, the pushing members do not need to enter the raceway on opposite sides of the entry port. Once the have pushed the pusher blocks, and thus a row of roller bodies cages, along a section of the raceway, the pusher blocks are removed and a new roller bodies cage is inserted. The newly inserted roller bodies cage is subsequently pushed along the raceway, in a first pushing step directly by a pushing member directly, and in a second pushing step via a pusher block.

The pushing device 300 shown in figure 17 is a double action pushing device, i.e. is configured to push roller bodies cages at opposite sides of the entry port 304. The slew bearing is provided with at least two other entry ports for removing roller bodies cages, pushed in front of the entry opening of those entry ports by the pushing device.

It is submitted that the pushing device 300 can also be configured in a single action pushing device, i.e. with a single pushing member to push roller bodies cages at one side of the entry port only.

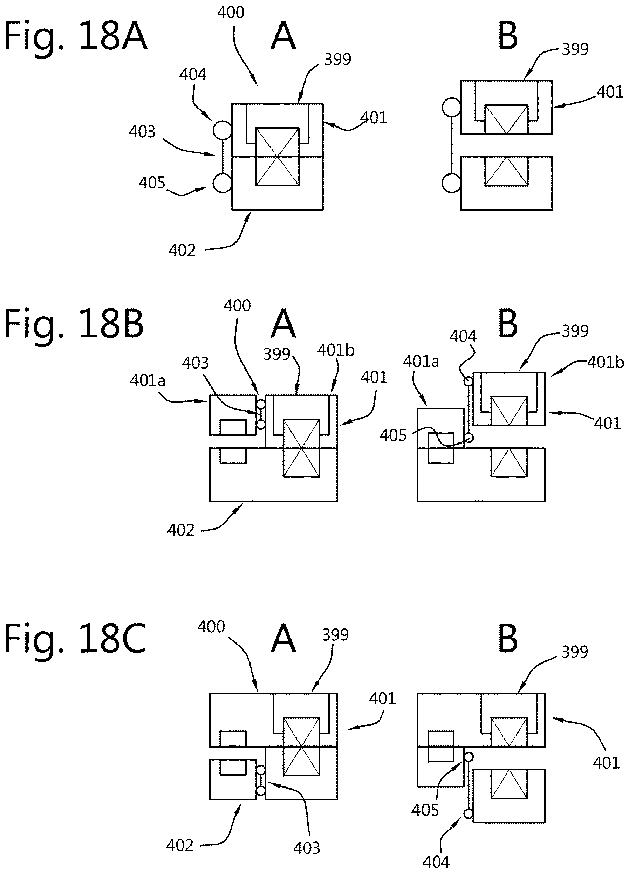

Fig. 18a - 18c show a schematical view in cross section of alternative configurations of a slew bearing 400 according to the invention wherein the moveable bearing ring 401 is provided with a top entry port 399.

Figures 18a A, 18b A and 18c A show the slew bearing 400 with the moveable bearing ring 401 in the operational position, and figures 18a B, 18b B and 18c B show the slew bearing 400 with the moveable bearing ring in the maintenance position.

Fig 18a shows a configuration wherein the slew bearing 400 comprises a moveable bearing ring 401 and a stationary bearing ring 402, and wherein an actuator 403 via a first seat section 404 is fixed to the stationary bearing ring and via a second seat section 405 is fixed to the moveable bearing ring, to enable the actuator 403 received in the actuator seats to move the main portions of the moveable bearing ring between the operational position and the maintenance position.

Fig 18b shows a configuration wherein the slew bearing 400 comprises a moveable bearing ring 401 and a stationary bearing ring 402, wherein the moveable bearing ring comprises a main portion 401a and an auxiliary portions 401b. the auxiliary portion comprising upper low-friction pads 406 of an auxiliary bearing. The actuator 403 is via a first seat section 404 fixed to the auxiliary portion 401a of the moveable bearing ring and via a second seat section 405 to the main portion 401b of the moveable bearing ring, to enable the actuator 403 received in the actuator seats to move the main portion of the moveable bearing ring between the operational position and the maintenance position.

Fig 18c shows a configuration wherein the slew bearing 400 comprises a moveable bearing ring 401 and a stationary bearing ring 402, wherein the stationary bearing ring comprises a main portion 402a and an auxiliary portions 402b. The auxiliary portion 402b comprising lower low-friction pads 406 of an auxiliary bearing. The actuator 403 is via a first seat section 404 fixed to the auxiliary portion 402a of the stationary bearing ring and via a second seat section 405 to the main portion 402b of the stationary bearing ring, to enable the actuator 403 received in the actuator seats to move the main portion of the moveable bearing ring between the operational position and the maintenance position by pushing the auxiliary portion 402a upwards relative to the main portion 402b, and thus lifting the moveable bearing ring, or, in an alternative configuration, by lowering the main portion 402a relative to the auxiliary portion 402b.

Fig. 19 is a side view of a vessel 1001 comprising a hoisting crane 1020 comprising a bearing structure 1025 according to the first aspect of the invention. The vessel 1001 has a hull 1002 with a working deck 1003 and, at the front of the hull 1002, a superstructure 1004 for crew accommodation, etc. The vessel 1001 has a hoisting crane 1020, disposed at the rear side of the vessel 1001, which hoisting crane 1020 has a vertical structure fixed to the hull 1002. The hoisting crane 1020 will be described in more detail below.

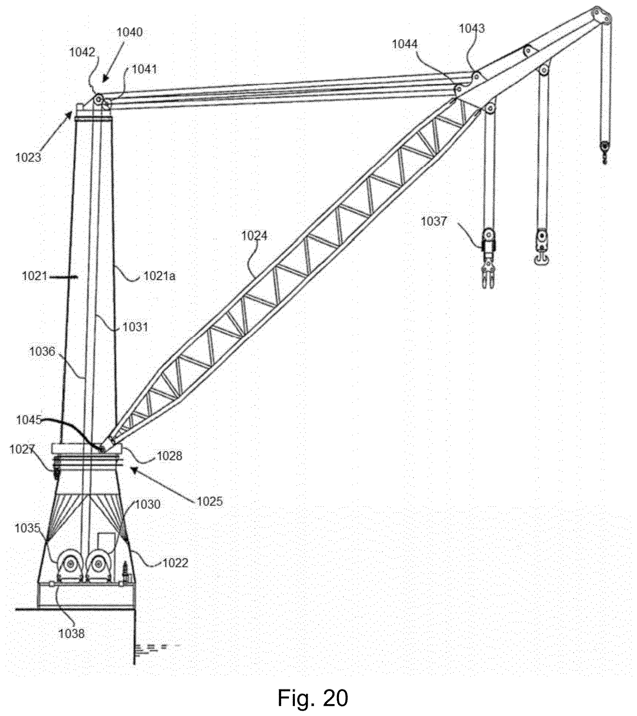

The hoisting crane 1020, which is illustrated in detail in fig. 20, has a substantially hollow vertical column 1021 with a foot 1022, which in this case is fixed to the hull 1002 of the vessel 1001. Alternatively, the foot 1022 of the crane 1020 can be fixed to any other support, e.g. a quay on the mainland. Furthermore, the column 1021 has a top 1023. Between the foot 1022 and the top 1023, the column 1021 has a body 1021a. Furthermore the hoisting crane 1020 comprises a jib 1024.

An annular bearing structure 1025 extends around the vertical column 1021 and guides and carries a jib connection member 1028, so that the jib connection member 1028, and therefore the jib 1024, can rotate about the column 1021. The annular bearing structure will be discussed in more detail below. In this case, the jib 1024 is connected pivotably to the jib connection member 1028 via a substantially horizontal pivot axis 1045, so that the jib 1024 can also be pivoted up and down. There is at least one drive motor 1027 for displacing the jib connection member 1028 along the annular bearing structure 1025.

To pivot the jib 1024 up and down, there is a topping winch 1030 provided with a topping cable 1031 which engages on the jib 1024.

Furthermore, the hoisting crane 1020 comprises a hoisting winch 1035 for raising and lowering a load, with an associated hoisting cable 1036 and a hoisting hook 1037. At the top 1023 of the column 1021 there is a top cable guide 1040 provided with a cable pulley assembly 1041 for the topping cable 1031 and with a second cable pulley assembly 1042 for the hoisting cable 1036.

One or more third cable pulley assemblies 1043 for the hoisting cable 1036 and a fourth cable pulley assembly 1044 for the topping cable 1031 are arranged on the jib 1024. The number of cable parts for each cable can be selected as appropriate by the person skilled in the art.

The winches 1030 and 1035 are in this case disposed in the foot 1022 of the vertical column 1021, so that the topping cable 1031 and the hoisting cable 1036 extend from the associated winch 1030, 1035 upward, through the hollow vertical column 1021 to the top cable guide 1040 and then towards the cable guides 1043, 1044 on the jib 1024.

The top cable guide 1040 has a rotary bearing structure, for example with one or more running tracks around the top of the column 1021 and running wheels, engaging on the running tracks, of a structural part on which the cable pulley assemblies are mounted. As a result, the top cable guide can follow rotary movements of the jib about the vertical column 1021 and adopt substantially the same angular position as the jib 1024.

The top cable guide 1040 may have an associated drive motor assembly which ensures that the top cable guide 1040 follows the rotary movements of the jib 1024 about the column 1021, but an embodiment without drive motor assembly is preferred.

The winches 1031 and 1035 are in this embodiment arranged on a movable winch support 1038, which is mounted movably with respect to the vertical column 1021. The winch support 1038 here is located in the vertical crane structure, preferably in the region of the foot 1022 under the circular cross section part of the column 1021, and is mechanically decoupled from the top cable guide 1040. The support 1038 could e. g. also be arranged in the hull of the vessel below the column, e. g. the foot could have an extension which extends into the hull.

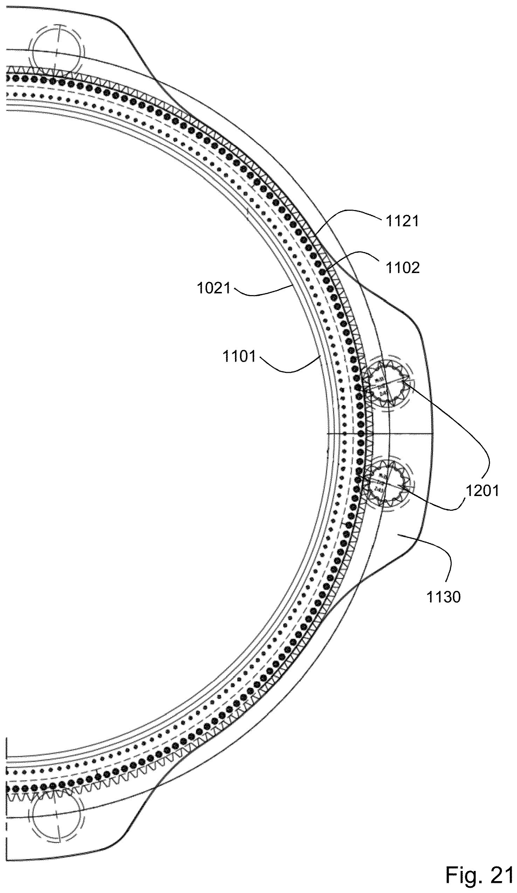

Fig. 21 shows a top view of a part of an annular bearing assembly according to the first aspect of the invention. The bearing assembly has a bearing centre (not shown) which is the centre point of the concentric circles visible in fig. 21. The bearing assembly comprises an lower ring 1101 and an upper ring (not shown). The lower ring 1101 is located on the inside of the circle formed by the annular bearing assembly, and is in the shown application connected to the column 1021. The upper ring is connected the jib connection member 1028, and further provided with a plurality of teeth 1121. The teeth 1121 are adapted to be engaged by a rotatable driving gear 1201, of which in fig. 21 two are shown. The driving gear 1201 are driven by a motor (not shown). By rotating the driving gear 1201, rotating of the upper ring relative to the lower ring 1101 and thus of the jib connection member 1028 relative to the column 1021 can be achieved. There is further provided a bearing assembly support structure 1130, which supports the bearing assembly. The bearing support structure 1130 is widened on the location of the driving gear 1201, such that the driving gear 1201 can also be supported by the bearing support structure 1130. In alternative embodiments, the driving gear 1201 can also be arranged on the inside of the annular bearing assembly.

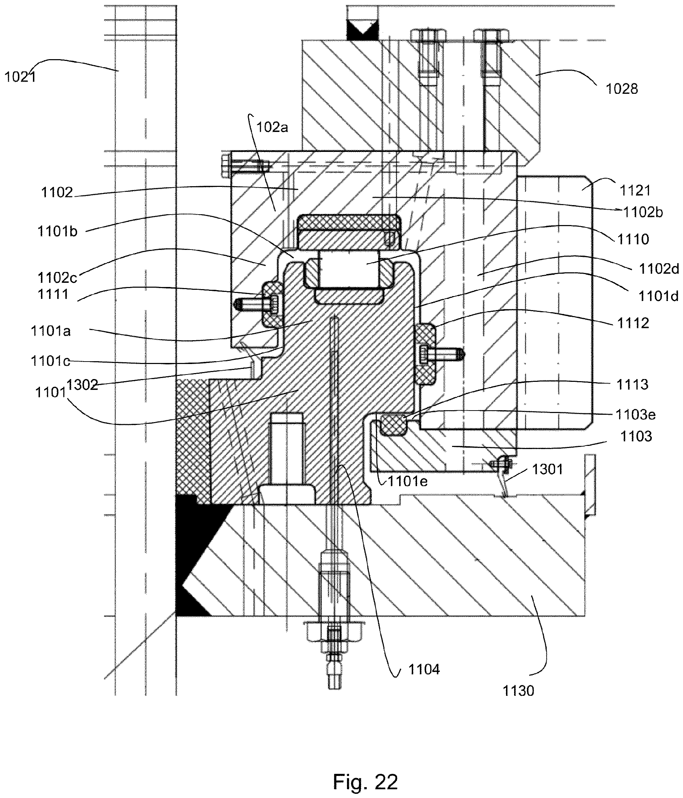

Fig. 22 shows a cross-section of the annular bearing assembly in an assembled state. The annular bearing assembly comprises the lower ring 1101, which is the assembled state is attached to the column 1021. The annular bearing assembly further comprises the upper ring which comprises of a first upper ring part 1102. As can be seen, the lower ring 1101 has a protruding mating part 1101a, which fits into a hollow mating part 1102a of the upper ring part 1102. The protruding mating part 1101a comprises an inner surface 1101c, an outer surface 1101d and a top surface 1101b. Furthermore, in the shown example the hollow mating part 1102a has a U-shaped form, which U in assembled state is in fact an upside-down or inverted U. The hollow mating part 1102a has an inner leg 1102c, an outer leg 1102d and a horizontal leg 1102b.. The upper ring further comprises a second upper ring part 1103, which is attached to a bottom surface the outer leg 1102d the first upper ring part 1102. The second upper ring part 1103 extends partially below the protruding mating part 1101a of the lower ring 1101, such that an upper surface 1103e of the second upper ring part 1103 faces a lower surface 1101e of the protruding mating part 1101a of the lower ring 1101.

In the context of this first aspect of the invention, terms as "inner" and "inwards" are meant to mean closer to the bearing centre in the horizontal plane, while terms as "outer" and "outwards" are meant to mean further away from the bearing centre in the horizontal plane. Terms as "top", "above" and "higher" on the one hand, and "bottom", "under" and "lower" are meant to be interpreted in the conventional meaning, i.e. seen in vertical direction. In fig. 22, inwards is to the left, and higher is to the top.

The annular bearing assembly according to the first aspect of the invention, when seen in a cross-section as in fig. 22, is provided with exactly four components 1110, 1111, 1112, 1113 that guide the movement of the first upper ring part 1102 and the second upper ring part 1103, relative to the lower ring 1101. Those four components consist of one roller 1110, and three slide pads 1111, 1112, 1113, 1114.

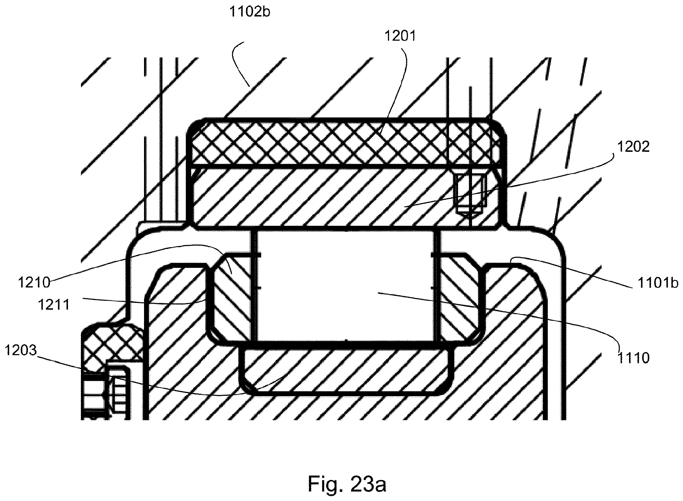

As can be seen, the protruding mating part 1101a of the lower ring 1101 comprises a groove 1211 at the top surface 1101b. This is shown in more detail in fig. 23a. In the groove 1211, there is a cage 1210 provided. The cage 1210 is arranged to receive the roller 1110, which in turn supports the upper ring and associated structures. The roller 1110 absorbs the vertical downward forces.

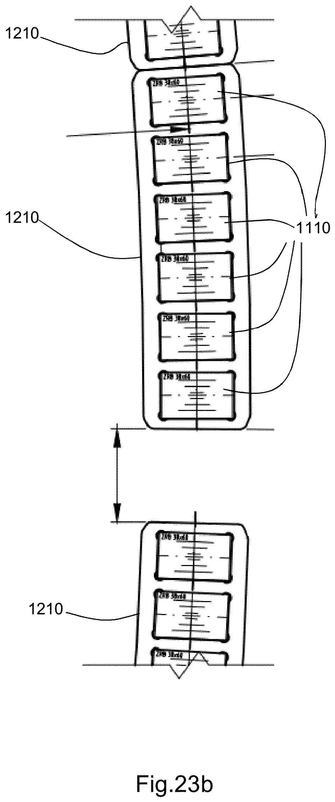

Fig. 23b illustrates a top view of the cages 1210. As can be seen, the cages 1210 are arranged in circumferentially in series. The bearing assembly comprises plurality of cages 1210, which each in turn comprise a plurality of rollers 1110, in this case six rollers 1110 in each cage. The rollers 1210 are also arranged circumferentially in series. The rollers 1110 are thus arranged in series when seen in a direction following the annular form of the bearing assembly. In other words, the centre of each roller 1110 is located substantially on the same distance of the bearing centre. As is further visible in fig. 23a, it is possible to arrange a some subsequent cages 1210 directly in contact with each other, while maintain a gap between other subsequent cages 1210.

For example, the distance of the centre of the rollers to the bearing centre may be 3687 mm, and the bearing assembly may be provided with 78 cages 1210, resulting in 468 rollers 1110. This results in a distribution of the vertical forces over said rollers 1110, and thus over the bearing assembly.

Preferably, each cage 1210 comprises at least four, five, six or seven rollers 1110. Preferably, the bearing assembly comprises at least fifty cages 1210.

Referring back to fig. 23a, wherein it is shown that optionally a raceway 202 of horizontal leg 1102b of the hollow mating part of the first upper ring part 1102 which is located above the rollers 1110 is manufactured in another metal than the rest of the first upper ring part 1102. The raceway 1202 is made from a metal that is suitable for contact with the rollers 1110 and movement relative to the rollers 1110. For example, the raceway 202 can be made from hardened steel or the material commercially available under the trademark HARDNOX. Further optionally, a part 1201 of horizontal leg 1102b of the hollow mating part of the first upper ring part 1102 which is located above the rollers 1110 is manufactured in a material, e.g. plastic, that is more elastically deformable than the rest of the first upper ring part 1102. This gives a small degree of elastic support to the upper ring 1102 and the associated components. Optionally, the material of said part 1201 is the same material as used for the slide pats 1111, 1112, 1113. Optionally, said material is the material commercially available under the trademark ORKOT.

The part 1203 below the groove 1211 is preferably made in a strong material, e.g. a strong metal, to minimize elastic deformation thereof due to the vertical forces, since such deformation would lead to suboptimal interaction of the lower ring and the upper ring, i.e. more friction. The part 1203 is optionally made from hardened steel or HARDNOX.

Referring now back to fig. 22, the first slide pad 1113 of said three slide pads is arranged on, i.e. comprised by, the upper surface 1103e of the second upper ring part 1103. It is thus arranged to enable sliding of the upper surface 1103e of the second upper ring part 1103 relative to the lower surface 1101e of the protruding mating part 1101a of the lower ring 1101. The first slide pad 1113 is, when the annular bearing assembly is assembled, located below the roller 1110, and radially outwards from the roller 1110. That is, at least the centre of the first slide pad 1113 is arranged radially outwards from a centre of the roller 1110. The first slide pad 1113 is exposed to vertical upward forces; however, these are considerably lower than the vertical forces to which the roller 1110 is exposed. The first slide pad 1113 thus prevents the upper ring from getting disconnected from the lower ring 1101 when upwards forces are present, e.g. because of tilting of the jib connection member.

The second slide pad 1111 of said three slide pads is arranged on, i.e. comprised by, the inner leg 1102c of the first upper ring part 1102. It is thus arranged to enable sliding between the inner leg 1102c of the first upper ring part 1102 and the inner surface 1101c of the protruding mating part 1101a of the lower ring 1101. As can be seen in fig. 22, the second slide pad 1111 is arranged below the roller 1110, and radially inwards from the roller 1110. Furthermore, the second slide pad 1111 is arranged above the first slide pad 1113, and radially inwards from the first slide pad 1113. The second slide pad 1111 is exposed to horizontal forces.

The third slide pad 1112 of said three slide pads is arranged on, i.e. comprised by, the outer leg 1102d of the first upper ring part 1102. It is thus arranged to enable sliding between the outer leg 1102d of the first upper ring part 1102 and the outer surface 1101d of the protruding mating part 1101a of the lower ring 1101. As can be seen in fig. 22, the third slide pad 1112 is arranged below the roller 1110, and radially outwards from the roller 1110. It is thus also arranged radially outwards from the second slide pad 1111. Furthermore, the third slide pad 1112 is arranged above the first slide pad 1113, and radially outwards from the first slide pad 1113.

The roller 1110 and the first slide pad 1113 are arranged such that the absorb the vertical forces. However, the roller 1110 carries the vast majority of those vertical forces, since the upper ring is supported on the rollers 1110, which as such carry the weight of the jib as well. In normal operations, the vertical upward forces should be limited or non-existing. The second slide pad 1111 and the third slide pad 1112 are engaged by radial forces. Preferably, as is in the shown example, the roller 1110 is located substantially in the centre of protruding mating part 1101a when seen in the radial or horizontal direction.

The arrangement of the annular bearing assembly according to the first aspect of the invention has proven to result in an improved distribution of the forces over the component of the bearing assembly, including the roller 1110 and the slide pads 1111, 1112, 1113. This results in more stability, as well as leas wear and fatigue of the components.

It should further be noted that is advantageous to arrange the sliding pads 1111, 1112, 1113 in or on the upper ring, such that no recesses must be made in the lower ring 1101 for such arrangements. As such, the lower ring 1101 is maintained as strong and robust as possible, which is advantageous considering the large vertical forces that must be carried by the lower ring 1101.

As is clearly visible in fig. 22, in a cross section as shown in fig. 22 the bearing assembly comprises exactly one roller 1110, one slide pad 1113 exposed to vertical forces, and two slide pads 1111, 1112 exposed to horizontal forces. As is already explained with reference to figures 23a-23b, the bearing assembly in practice comprises a plurality of rollers 1110. Similarly, it is possible that each for one or more of the slide pads 1111, 1112, 1113 in practice multiple slide pads are provided. That is, over the circle that each of these slide pads 1111, 1112, 1113 forms in the annular bearing assembly, it is possible that said slide pad is formed by multiple slide pads, each covering a part of the circle. This may be easier in construction and maintenance. Furthermore, it is possible that on small parts of said circle no sliding pad is provided, because of practical considerations.

The bearing assembly according to the first aspect of the invention can be used for applications such a hoisting crane, and is thus relatively large. The diameter of the bearing assembly may for example be at least 5m.

Furthermore shown in fig. 22, is a temperature sensor 1104. The temperature sensor 1104 is adapted to measure the temperature of at least a part of the bearing assembly. When the temperature becomes too high, the slide pads 1111, 1112, 1113 may be damaged. Therefore, the temperature sensor 1104 is connected to a system that is adapted to stop the use of the bearing assembly when the temperature rises too high, or it is at least connected to a system which is adapted to indicate such a situation to an operator.

Furthermore shown in fig. 22 are seals 1301 and 1302. These seals 1301, 1302 are arranged to prevent liquid, e.g. lubricant such as oil-based lubricants, from leaking.

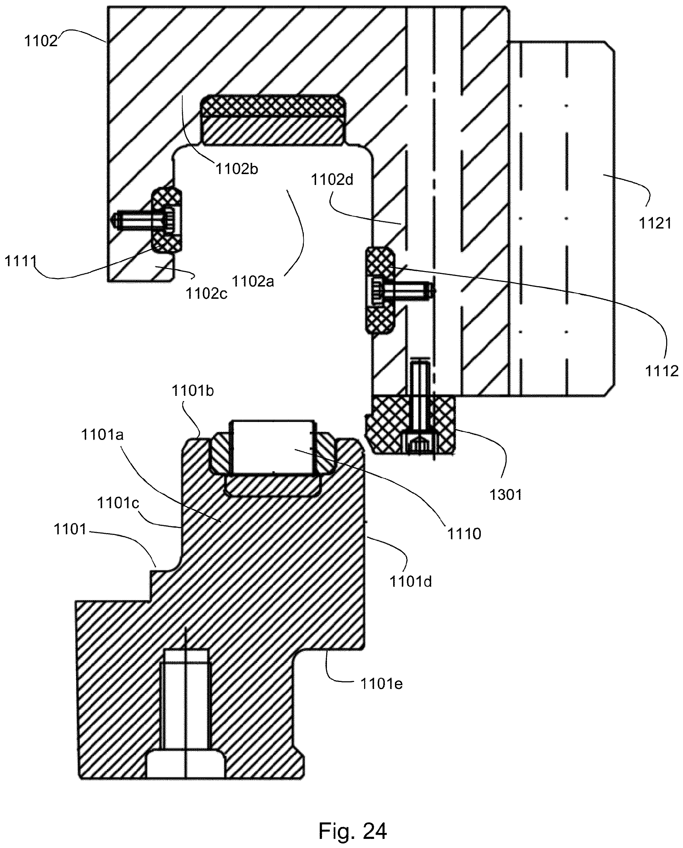

Fig. 24 illustrates a method according to the first aspect of the invention that can be applied to assemble a bearing assembly according to the first aspect of the invention. To assemble the bearing assembly according to the first aspect of the invention, the upper ring should be arranged on the lower ring 1101 such that the hollow mating part 1102a of the first upper ring part 1102 receives the protruding mating part 1101a of the lower ring 1101. However, since the second upper ring part 1103 in assembled position extends below the lower ring 1101, it is not possible to arrange the upper ring while the first upper ring part 1102 and the second upper ring part 1102 attached to each other. Furthermore, it should be avoided as much as possible that metal of the lower ring 1101 and metal of the upper ring are in contact with each other during such arrangement, since this would result in scraping and damaging of the components.

Considering the above, it is envisaged by the inventors to attach a guide block 1301 on the bottom surface of the outer leg 1102d of the first upper ring part 1102. The guide block 1301 guides the arrangement of the first upper ring part 1102 onto the lower ring 1101.

After the arrangement of the first upper ring part 1102 on the lower ring 1101, the guide block 1301 is detached from the first upper ring part 1102, and the second upper ring part 1103 is attached thereon.

In a possible embodiment, the second upper ring part 1103 is arranged below the lower surface 1101e of the protruding mating part 1101a of the lower ring 1101 prior to the arrangement of the first upper ring part 1102 on the lower ring 1101. After said arrangement, the second upper ring part 1103 is arranged against the first upper ring part 1102 and attached thereto.

In a possible embodiment, the second upper ring part 1103 consists of two half-annular parts, which together form the annular form of the second upper ring part 1103. That is, the two parts each form a part of said annulus. It is then possible to first arrange the first upper ring part 1102 on the lower ring 1101, and thereafter slide each of the two half-annular parts from the side under the first upper ring part 1102, and then attach them thereto.

The invention is defined in the appended claims.

## Claims

1. Annular bearing assembly with a bearing centre, the bearing assembly comprising a lower ring and an upper ring, **characterized in that**:
• the lower ring (1101) comprises a protruding mating part (1101a) comprising:
- an inner surface (1101c), an outer surface (1101d) and a top surface (1101b), wherein in the top surface a groove (1211) is present in which a circumferential series of cages (1210) is arranged, wherein each cage accommodates at least one array of rollers (1110) spaced apart in circumferential from one another, e.g. just one array or exactly two parallel arrays of rollers, e.g. substantially cylindrical rollers,
• the upper ring comprises:
- a first upper ring part (1102) comprising an inverted U-shaped hollow mating part (1102a) with an inner leg (1102c), an outer leg (1102d) and a horizontal leg (1102b), which hollow mating part is adapted to receive the protruding mating part (1101a) of the lower ring such that the horizontal leg of the hollow mating part is in contact with the rollers and the upper ring is vertically supported by the rollers, the rollers absorbing vertical forces;
- a second upper ring part (1103), which is arranged against a bottom surface of one of the outer leg and the inner leg of the hollow mating part of the first upper ring part, the second upper ring part horizontally protruding below the protruding mating part of the lower ring (1101), such that an upper surface of the second upper ring part partially faces a lower surface of the protruding mating part of the lower ring,
wherein the bearing assembly further has, when seen in a cross-section, exactly three slide pads, consisting of:
• a first slide pad (1113) of said three slide pads,
- which is arranged to enable sliding between the upper surface of second upper ring part and the lower surface of the protruding mating part of the lower ring that the upper surface of the second upper ring part faces,
- the first slide pad absorbing any vertical upwards forces,
- wherein the first slide pad is arranged lower than the roller or rollers in said cross-section, and a centre of the first slide pad is arranged horizontally offset, e.g. outwards, from a centre of said roller or rollers;
• a second slide pad (1111) of said three slide pads,
- which is arranged to enable sliding between the inner surface of the protruding mating part of the lower ring and the inner leg of the hollow mating part of the first upper ring part,
- the second slide pad thereby absorbing horizontal forces,
- wherein the second slide pad is arranged lower than the roller or rollers in said cross-section, and horizontally offset, e.g. inwards from the roller or rollers, and above the first slide pad
• a third slide pad (1112) of said three slide pads,
- which is arranged to enable sliding between the outer surface of the protruding mating part of the lower ring and the outer leg of the hollow mating part of the first upper ring part,
- the third slide pad thereby absorbing horizontal forces,
- wherein the third slide pad is arranged lower than the roller or rollers in said cross-section, and horizontally offset, e.g. outwards, from the roller or rollers, and above the first slide pad.

2. Bearing assembly according to claim 1, wherein the second upper ring part (1103) comprises the first slide pad (1113), and/or the first upper ring part (1102) comprises the second slide pad (1111) in the inner leg (1102c) of the hollow mating part, and/or the first upper ring part (1102) comprises the third slide pad (1112) in the outer leg of the hollow mating part.

3. Bearing assembly according to claim 1 or claim 2, wherein the second upper ring part (1103) consists of two half-annular parts, such that the two half-annular parts combined form the annular shape.

4. Bearing assembly according to any of the preceding claims 1-3, wherein the horizontal leg (1102b) of the hollow mating part of the first upper ring part (1102) is provided with an embedded raceway which is located above the rollers and is manufactured in of metal adapted for contact with the rollers.

5. Bearing assembly according to any of the preceding claims 1-4, wherein a part of horizontal leg (1102b) of the hollow mating part of the first upper ring part (1102) which is located above the rollers, and when applicable above the raceway of claim 4, is manufactured in a material, e.g. plastic, that is more elastically deformable than the rest of the first upper ring part and/or the raceway.

6. Bearing assembly according to any of the preceding claims 1-5, further comprising a temperature sensor (1104) for measuring the temperature of at least a part of the annular bearing assembly, e.g. mounted in a hole in the lower ring.

7. Bearing assembly according to any of the preceding claims 1-6, wherein each cage comprises six elongated cylindrical rollers, and wherein the bearing assembly comprises at least fifty cages in series in circumferential direction.

8. Bearing assembly according to any of the preceding claims 1-7, wherein the inner diameter of the bearing is at least 5 meter.

9. Hoisting crane (1020), comprising:•a column (1021), e.g. a substantially hollow vertical column comprising a foot and a top and a body between the foot and the top,•a jib (1024),•a jib connection member (1028) which is disposed on the column and to which the jib is connected pivotably,•the bearing assembly according to any of the preceding claims 1-8, wherein the lower ring is connected to the column, and the upper ring is connected to the jib connection member.

10. Method for assembling a bearing assembly according to any of the preceding claims 1-8, wherein the method comprises the steps of:
• attaching a guide block on the bottom surface of the outer leg of the hollow mating part of the first upper ring part,
• arranging the first upper ring part on the lower ring, such that the protruding mating part of the lower ring is arranged in the hollow mating part of the first upper ring part, and the first upper ring part is supported by the rollers,
• detaching the guide block from the first upper ring part,
• attaching the second upper ring part on the bottom surface of the outer leg of the hollow mating part of the first upper ring part.

11. Method according to claim 10, further comprising the steps of:
• prior to arranging the first upper ring part on the lower ring: arranging the second upper ring part below the lower surface of the protruding mating part of the lower ring; and
• after arranging the first upper ring part on the lower ring and detaching the guide block from the first upper ring part, but before attaching the second upper ring part on the first upper ring part: arranging the second upper ring part against the bottom surface of the outer leg of the hollow mating part of the first upper ring part.

12. Method according to claim 10, wherein the second upper ring part consists of two half-annular parts, wherein each of these parts constitutes a part of the annular shape of the second upper ring part, such that the two half-annular parts combined form the annular shape,
wherein the method further comprises the steps of:
• after arranging the first upper ring part on the lower ring and detaching the guide block from the first upper ring part, but before attaching the second upper ring part on the first upper ring part: arranging each of the two half-annular parts from the side under the first upper ring part.

## Patentansprüche

1. Ringförmige Lageranordnung mit einem Lagerzentrum, wobei die Lageranordnung einen unteren Ring und einen oberen Ring umfasst, **dadurch gekennzeichnet, dass**:
- der untere Ring (1101) ein vorstehendes Gegenstück (1101a) umfasst, umfassend:
-- eine innere Fläche (1101c), eine äußere Fläche (1101d) und eine obere Fläche (1101b), wobei in der oberen Fläche eine Nut (1211) vorhanden ist, in der eine umlaufende Reihe von Käfigen (1210) angeordnet ist, wobei jeder Käfig mindestens eine Reihe von Rollen (1110) enthält, die in Umfangsrichtung voneinander beabstandet sind, z.B. nur eine Reihe oder genau zwei parallele Reihen von Rollen, z.B. im Wesentlichen zylindrische Rollen,
- wobei der obere Ring umfasst:
-- ein erstes oberes Ringteil (1102), umfassend ein invertiertes U-förmiges hohles Gegenstück (1102a) mit einem inneren Schenkel (1102c), einem äußeren Schenkel (1102d) und einem horizontalen Schenkel (1102b), wobei das hohle Gegenstück so ausgebildet ist, dass es das vorstehende Gegenstück (1101a) des unteren Rings empfängt, so dass der horizontale Schenkel des hohlen Gegenstücks mit den Rollen in Kontakt ist und der obere Ring vertikal von den Rollen getragen wird, wobei die Rollen vertikale Kräfte aufnehmen;
-- ein zweites oberes Ringteil (1103), das gegen eine Bodenfläche des äußeren Schenkels oder des inneren Schenkels des hohlen Gegenstücks des ersten oberen Ringteils angeordnet ist, wobei das zweite obere Ringteil horizontal unter das vorstehende Gegenstück des unteren Rings (1101) vorsteht, so dass eine obere Fläche des zweiten oberen Ringteils teilweise einer unteren Fläche des vorstehenden Gegenstücks des unteren Rings gegenüberliegt,
wobei die Lageranordnung weiter, im Querschnitt gesehen, genau drei Gleitstücke aufweist, bestehend aus:
- einem ersten Gleitstück (1113) der genannten drei Gleitstücke,
-- das so angeordnet ist, dass es ein Gleiten zwischen der oberen Fläche des zweiten oberen Ringteils und der unteren Fläche des vorstehenden Gegenstücks des unteren Rings ermöglicht, dem die obere Fläche des zweiten oberen Ringteils gegenüberliegt,
-- wobei das erste Gleitstück alle vertikalen Aufwärtskräfte absorbiert,
-- wobei das erste Gleitstück tiefer angeordnet ist als die Rolle oder die Rollen in dem Querschnitt, und ein Zentrum des ersten Gleitstücks horizontal versetzt, z.B. nach außen, von einem Zentrum der Walze oder der Walzen angeordnet ist;
- ein zweites Gleitstück (1111) der genannten drei Gleitstücke,
-- das so angeordnet ist, dass es ein Gleiten zwischen der inneren Fläche des vorstehenden Gegenstücks des unteren Rings und dem inneren Schenkel des hohlen Gegenstücks des ersten oberen Ringteils ermöglicht,
-- wobei das zweite Gleitstück dadurch horizontale Kräfte absorbiert,
-- wobei das zweite Gleitstück im Querschnitt tiefer als die Rolle oder Rollen und horizontal versetzt, z.B. nach innen, von der Rolle oder den Rollen und oberhalb des ersten Gleitstücks angeordnet ist,
- ein drittes Gleitstück (1112) der drei Gleitstücke,
-- das so angeordnet ist, dass es ein Gleiten zwischen der Außenfläche des vorstehenden Gegenstücks des unteren Rings und dem äußeren Schenkel des hohlen Gegenstücks des ersten oberen Ringteils ermöglicht,
-- wobei das dritte Gleitstück dadurch horizontale Kräfte absorbiert,
-- wobei das dritte Gleitstück niedriger als die Rolle oder Rollen in dem Querschnitt und horizontal versetzt, z.B. nach außen, von der Rolle oder den Rollen und oberhalb des ersten Gleitstücks angeordnet ist.

2. Lageranordnung gemäß Anspruch 1, wobei das zweite obere Ringteil (1103) das erste Gleitstück (1113) umfasst, und/oder das erste obere Ringteil (1102) das zweite Gleitstück (1111) im inneren Schenkel (1102c) des hohlen Gegenstücks umfasst, und/oder das erste obere Ringteil (1102) das dritte Gleitstück (1112) im äußeren Schenkel des hohlen Gegenstücks umfasst.

3. Lageranordnung gemäß Anspruch 1 oder Anspruch 2, wobei das zweite obere Ringteil (1103) aus zwei halbringförmigen Teilen besteht, so dass die beiden halbringförmigen Teile zusammen die Ringform bilden.

4. Lageranordnung gemäß einem der vorhergehenden Ansprüche 1-3, wobei der horizontale Schenkel (1102b) des hohlen Gegenstücks des ersten oberen Ringteils (1102) mit einer eingebetteten Laufbahn bereitgestellt ist, die sich oberhalb der Rollen befindet und aus einem Metall hergestellt ist, das für Kontakt mit den Rollen ausgebildet ist.

5. Lageranordnung gemäß einem der vorhergehenden Ansprüche 1-4, wobei ein Teil des horizontalen Schenkels (1102b) des hohlen Gegenstücks des ersten oberen Ringteils (1102), der sich oberhalb der Rollen und gegebenenfalls oberhalb der Laufbahn nach Anspruch 4 befindet, aus einem Material, z.B. Kunststoff, hergestellt ist, das elastisch verformbarer ist als der Rest des ersten oberen Ringteils und/oder der Laufbahn.

6. Lageranordnung gemäß einem der vorangehenden Ansprüche 1-5, weiter umfassend einen Temperatursensor (1104) zur Messung der Temperatur zumindest eines Teils der ringförmigen Lageranordnung, der z.B. in einem Loch im unteren Ring angebracht ist.

7. Lageranordnung gemäß einem der vorangehenden Ansprüche 1-6, wobei jeder Käfig sechs langgestreckte zylindrische Rollen umfasst und wobei die Lageranordnung zumindest fünfzig Käfige in Umfangsrichtung hintereinander umfasst.

8. Lageranordnung gemäß einem der vorangehenden Ansprüche 1-7, wobei der Innendurchmesser des Lagers zumindest 5 Meter beträgt.

9. Hebekran (1020), umfassend: - eine Säule (1021), z.B. eine im Wesentlichen hohle vertikale Säule, die einen Fuß und eine Spitze und einen Körper zwischen dem Fuß und der Spitze umfasst, - einen Ausleger (1024), - ein Auslegerverbindungselement (1028), das an der Säule angeordnet ist und mit dem der Ausleger schwenkbar verbunden ist, - die Lageranordnung gemäß einem der vorhergehenden Ansprüche 1-8, wobei der untere Ring mit der Säule verbunden ist und der obere Ring mit dem Auslegerverbindungselement verbunden ist.

10. Verfahren zur Montage einer Lageranordnung gemäß einem der vorangehenden Ansprüche 1-8, wobei das Verfahren die folgenden Schritte umfasst:
- Anbringen eines Führungsblocks an der Unterseite des äußeren Schenkels des hohlen Gegenstücks des ersten oberen Ringteils,
- Anordnen des ersten oberen Ringteils auf dem unteren Ring, so dass das vorstehende Gegenstück des unteren Rings in dem hohlen Gegenstück des ersten oberen Ringteils angeordnet ist, und das erste obere Ringteil von den Rollen getragen wird,
- Lösen des Führungsblocks von dem ersten oberen Ringteil,
- Anbringen des zweiten oberen Ringteils an der Unterseite des äußeren Schenkels des hohlen Gegenstücks des ersten oberen Ringteils.

11. Verfahren gemäß Anspruch 10, weiter umfassend die folgenden Schritte:
- vor dem Anordnen des ersten oberen Ringteils auf dem unteren Ring: Anordnen des zweiten oberen Ringteils unter der unteren Fläche des vorstehenden Gegenstücks des unteren Rings; und
- nach dem Anordnen des ersten oberen Ringteils auf dem unteren Ring und dem Lösen des Führungsblocks von dem ersten oberen Ringteil, aber vor dem Anbringen des zweiten oberen Ringteils auf dem ersten oberen Ringteil: Anordnen des zweiten oberen Ringteils gegen die untere Fläche des äußeren Schenkels des hohlen Gegenstücks des ersten oberen Ringteils.

12. Verfahren gemäß Anspruch 10, wobei das zweite obere Ringteil aus zwei halbringförmigen Teilen besteht, wobei jedes dieser Teile einen Teil der ringförmigen Form des zweiten oberen Ringteils bildet, so dass die beiden halbringförmigen Teile zusammen die ringförmige Form bilden,
wobei das Verfahren weiter die folgenden Schritte umfasst:
- nach dem Anordnen des ersten oberen Ringteils auf dem unteren Ring und dem Lösen des Führungsblocks von dem ersten oberen Ringteil, aber vor dem Anbringen des zweiten oberen Ringteils auf dem ersten oberen Ringteil: Anordnen jedes der beiden halbringförmigen Teile von der Seite unter dem ersten oberen Ringteil.

## Revendications

1. Ensemble de palier annulaire avec un centre de palier, l'ensemble de palier comprenant une bague inférieure et une bague supérieure, **caractérisé en ce que** :
la bague inférieure (1101) comprend une partie de couplage en saillie (1101a) comprenant :
une surface interne (1101c), une surface externe (1101d) et une surface supérieure (1101b), dans lequel dans la surface supérieure, est présente une rainure (1211) dans laquelle est agencée une série de cages (1210), dans lequel chaque cage loge au moins un groupe de rouleaux (1110) espacés de manière circonférentielle les uns des autres, par exemple juste un groupe ou exactement deux groupes parallèles de rouleaux, par exemple des rouleaux sensiblement cylindriques,
la bague supérieure comprend :
une première partie de bague supérieure (1102) comprenant une partie de couplage creuse (1102a) en forme de U inversé avec une patte interne (1102c), une patte externe (1102d) et une patte horizontale (1102b), laquelle partie de couplage creuse est adaptée pour recevoir la partie de couplage en saillie (1101a) de la bague inférieure de sorte que la patte horizontale de la partie de couplage creuse est en contact avec les rouleaux et la bague supérieure est supportée, de manière verticale, par les rouleaux, les rouleaux absorbant des forces verticales ;
une seconde partie de bague supérieure (1103), qui est agencée contre une surface inférieure de l'une parmi la patte externe et la patte interne de la partie de couplage creuse de la première partie de bague supérieure, la seconde partie de bague supérieure faisant horizontalement saillie au-dessous de la partie de couplage en saillie de la bague inférieure (1101), de sorte qu'une surface supérieure de la seconde partie de bague supérieure fait partiellement face à une surface inférieure de la partie de couplage en saillie de la bague inférieure,
dans lequel l'ensemble de palier a en outre, lorsqu'il est observé en coupe, exactement trois patins de coulissement, se composant de :
un premier patin de coulissement (1113) desdits trois patins de coulissement,
qui est agencé pour permettre le coulissement entre la surface supérieure de la seconde partie de bague supérieure et la surface inférieure de la partie de couplage en saillie de la bague inférieure à laquelle la surface supérieure de la seconde partie de bague supérieure fait face,
le premier patin de coulissement absorbant l'une quelconque des forces verticales ascendantes,
dans lequel le premier patin de coulissement est agencé plus bas que le rouleau ou les rouleaux dans ladite section transversale, et un centre du premier patin de coulissement est agencé de manière horizontalement décalée, par exemple vers l'extérieur, d'un centre dudit rouleau ou desdits rouleaux ;
un deuxième patin de coulissement (1111) desdits trois patins de coulissement,
qui est agencé pour permettre le coulissement entre la surface interne de la partie de couplage en saillie de la bague inférieure et la patte interne de la partie de couplage creuse de la première partie de bague supérieure,
le deuxième patin de coulissement absorbant ainsi des forces horizontales,
dans lequel le deuxième patin de coulissement est agencé plus bas que le rouleau ou les rouleaux dans ladite section transversale, et horizontalement décalé par rapport au rouleau ou aux rouleaux, et au-dessus du premier patin de coulissement,
un troisième patin de coulissement (1112) desdits trois patins de coulissement,
qui est agencé pour permettre le coulissement entre la surface externe de la partie de couplage en saillie de la bague inférieure et la patte externe de la partie de couplage creuse de la première partie de bague supérieure,
le troisième patin de coulissement absorbant ainsi les forces horizontales,
dans lequel le troisième patin de coulissement est agencé plus bas que le rouleau ou les rouleaux dans ladite section transversale, et horizontalement décalé, par exemple vers l'extérieur, du rouleau ou des rouleaux, et au-dessus du premier patin de coulissement.

2. Ensemble de palier selon la revendication 1, dans lequel la seconde partie de bague supérieure (1103) comprend le premier patin de coulissement (1113) et/ou la première partie de bague supérieure (1102) comprend le deuxième patin de coulissement (1111) dans la patte interne (1102c) de la partie de couplage creuse, et/ou la première partie de bague supérieure (1102) comprend le troisième patin de coulissement (1112) dans la patte externe de la partie de couplage creuse.

3. Ensemble de palier selon la revendication 1 ou la revendication 2, dans lequel la seconde partie de bague supérieure (1103) se compose de deux parties semi-annulaires, de sorte que les deux parties semi-annulaires combinées forment la forme annulaire.

4. Ensemble de palier selon l'une quelconque des revendications 1 à 3, dans lequel la patte horizontale (1102b) de la partie de couplage creuse de la première partie de bague supérieure (1102) est prévue avec un chemin de roulement intégré qui est situé au-dessus des rouleaux et est fabriqué dans un métal adapté pour le contact avec les rouleaux.

5. Ensemble de palier selon l'une quelconque des revendications 1 à 4, dans lequel une partie de la patte horizontale (1102b) de la partie de couplage creuse de la première partie de bague supérieure (1102) qui est positionnée au-dessus des rouleaux, et lorsque cela est applicable au-dessus du chemin de roulement selon la revendication 4, est fabriquée avec un matériau, par exemple du plastique, qui est plus élastiquement déformable que le reste de la première partie de bague supérieure et/ou du chemin de roulement.

6. Ensemble de palier selon l'une quelconque des revendications 1 à 5, comprenant en outre un capteur de température (1104) pour mesurer la température d'au moins une partie de l'ensemble de palier annulaire, par exemple monté dans un trou dans la bague inférieure.

7. Ensemble de palier selon l'une quelconque des revendications 1 à 6, dans lequel chaque cage comprend six rouleaux cylindriques allongés, et dans lequel l'ensemble de palier comprend au moins cinquante cages en série dans la direction circonférentielle.

8. Ensemble de palier selon l'une quelconque des revendications 1 à 7, dans lequel le diamètre interne du palier est d'au moins 5 mètres.

9. Grue de levage (1020) comprenant : une colonne (1021), par exemple une colonne verticale sensiblement creuse comprenant un pied et un sommet et un corps entre le pied et le sommet, une flèche (1024), un élément de raccordement de flèche (1028) qui est disposé sur la colonne et auquel la flèche est raccordée de manière pivotante, l'ensemble de palier selon l'une quelconque des revendications 1 à 8, dans laquelle la bague inférieure est raccordée à la colonne, et la bague supérieure est raccordée à l'élément de raccordement de flèche.

10. Procédé pour assembler un ensemble de palier selon l'une quelconque des revendications 1 à 8, dans lequel le procédé comprend les étapes consistant à :
fixer un bloc de guidage sur la surface inférieure de la patte supérieure de la partie de couplage creuse de la première partie de bague supérieure,
agencer la première partie de bague supérieure sur la bague inférieure, de sorte que la partie de couplage en saillie de la bague inférieure est agencée dans la partie de couplage creuse de la première partie de bague supérieure, et la première partie de bague supérieure est supportée par les rouleaux,
détacher le bloc de guidage de la première partie de bague supérieure,
fixer la seconde partie de bague supérieure sur la surface inférieure de la patte externe de la partie de couplage creuse de la première partie de bague supérieure.

11. Procédé selon la revendication 10, comprenant en outre les étapes consistant à :
avant d'agencer la première partie de bague supérieure sur la bague inférieure : agencer la seconde partie de bague supérieure sous la surface inférieure de la partie de couplage en saillie de la bague inférieure ; et
après avoir agencé la première partie de bague supérieure sur la bague inférieure et détaché le bloc de guidage de la première partie de bague supérieure, mais avant de fixer la seconde partie de bague supérieure sur la première partie de bague supérieure : agencer la seconde partie de bague supérieure contre la surface inférieure de la patte externe de la partie de couplage creuse de la première partie de bague supérieure.

12. Procédé selon la revendication 10, dans lequel la seconde partie de bague supérieure se compose de deux parties semi-annulaires, dans lequel chacune de ces parties constitue une partie de la forme annulaire de la seconde partie de bague supérieure, de sorte que les deux parties semi-annulaires combinées forment la forme annulaire,
dans lequel le procédé comprend en outre les étapes consistant à :
après avoir agencé la première partie de bague supérieure sur la bague inférieure et détaché le bloc de guidage de la première partie de bague supérieure, mais avant de fixer la seconde partie de bague supérieure sur la première partie de bague supérieure : agencer chacune des deux parties semi-annulaires à partir du côté situé sous la première partie de bague supérieure.
